# EUROPEAN PATENT APPLICATION

(11) **EP 1 653 346 A2**
(43) Date of publication of application: **03.05.2006**
(21) Application number: 05020793.5
(22) Date of filing: 23.09.2005
(51) Int. Cl.: G06F 9/44

(54) **Message-passing processor based on the Pi-calculus**

(30) Priority: 28.10.2004 US 977755
(71) Applicant: Microsoft Corporation, Redmond WA 98052 (US)
(72) Inventor: Singh, Satnam, Redmond, WA 98052 (US)
(74) Representative: Goddar, Heinz J.

(57) **Abstract**

A processor designed to directly execute machine code that is based on the asynchronous pi-calculus is disclosed Such a processor may be an element of a multi-processor system that aims to provide a scalable, loosely-coupled architecture for executing programs based on the pi-calculus

## Description

### CROSS-REFERENCE TO RELATED APPLICATIONS

The subject matter disclosed and claimed herein is related to the subject matter disclosed and claimed in U S patent application no 10/816,558. filed on March 11, 2004, entitled "Process Language For Microprocessors With Finite Resources " The disclosure of the above-referenced U S patent application is incorporated herein by reference

### FIELD OF THE INVENTION

Generally, the invention relates to computer processors More particularly, the invention relates to a processor designed to directly execute machine code that is based on the asynchronous pi-calculus

### BACKGROUND OF THE INVENTION

The pi-calculus provides a way to effectively model loosely coupled message passing systems where the communication links can be dynamically reorganized, e g , when a cell phone moves from one base station to another The pi-calculus is described in detail in Robin Milner, "Communicating and mobile systems the pi-calculus," Cambridge University Press, 1999 Originally this model was used to formally reason about such systems and more recently pi-calculus based programming languages have been proposed to actually implement systems Also, the original pi-calculus was a synchronous model where the sending of a message was acknowledged by the receiver An asynchronous pi-calculus has been developed wherein a message may be sent without needing to wait for a reply (*a la,* the Internet)

Formalisms based on the pi-calculus approach permit reasoning about the behavior of communicating systems in a ugorous manner For example, one could analyze two concurrent processes to ensure that their communication conforms to some protocol Programs written in languages based on the pi-calculus have a discipline imposed on them that makes manual or automatic analysis easier than trying to perform the equivalent analysis with arbitrary C# code

For some, the notion that the pi-calculus can form the basis of a programming language was a radical idea, but several projects have shown that this approach may have many advantages Programming languages based on the pi-calculus are being developed for designing and implementing loosely-coupled message passing systems and in particular web services One practical application of the pi-calculus includes the analysis of "contracts" for web services

An example system that employs a programming language based on the pi-calculus works by executing on top of conventional system software (*e g* , common language runtime ("CLR")) and conventional processor architectures (*e g* , Intel's x86 processors) It would be desirable, however, if a system architecture or processor were available for directly executing loosely-coupled message passing programs That is, to close the semantic gap between pi-calculus level code and conventional instruction set architectures, it may be desirable to have a message passing processor system that directly executes pi-calculus based programs

It would also be desirable if such systems were designed with appropriate processor and memory architectures to ensure that these systems may be scaled as more processors are added That is, it would be particularly desirable if such a processor could achieve performance, not through enormous complexity concentrated into a single processing engine, as has been the case for x86 architectures, but through the scalable deployment of many simple, small processors Small processors based on a loosely-coupled architecture makes it easier to trade off performance and power For low-power applications, one might need to deploy only a single processor For a computationally sophisticated task, like Internet search acceleration or biological computing, it might be desirable to deploy hundreds of processors

### SUMMARY OF THE INVENTION

The invention described herein provides a suitable intermediate compilation technology for efficiently implementing pi-calculus based programs on conventional processors, and also provides novel instruction set architectures based on the pi-calculus primitives A prototype processor for the pi-calculus has been designed and implemented on real hardware

The invention provides an instruction set architecture and processor design for executing pi-calculus based programs directly on hardware Though an example embodiment of the processor of the invention may have a rudimentary operating system kernel, there is no need to wnte code to manage multiple processes, context switches, *etc* Task switching, for example, may be performed in hardware by the processor and the concurrent possibilities of the code are made evident through the use of pi-calculus based programs This also allows code to run on another processor or even at a remote location

Such an architecture may be described as being "loosely coupled " That is, several components of a program, running on different machines, may communicate with each other by passing messages In the world of conventional processors, a component would request performance of a certain task, and wait for a reply to the request In a loosely-coupled architecture, there is typically no central processor that controls processing flow A particular processor merely sends a message requesting performance of a certain function, and then moves on to do whatever it is programmed to do next, typically without waiting for a reply to the first request Thus, such a system is asynchronous Eventually, a reply will be received by the processor that sent the message, or by another processor, according to some set of prescribed rules This type of architecture might help to better harness the power of silicon chips by providing a loosely coupled framework that enables processors to proceed as much as possible independently (and thus concurrently)

In such a loosely-coupled architecture, however, there is a need for a theory that regulates the outcome of such message passing in controlled and predictable manner Asynchronous pi-calculus provides such a theory A processor according to the invention focuses on asynchronous pi-calculus Instruction sets corresponding to the pi-calculus primitives have been defined m hardware Also, the processor schedules itself between threads, which is a function typically accomplished by software A processor system according to the invention may be used, for example, in the design and implementation of web services that operate directly on FPGA hardware

### BRIEF DESCRIPTION OF THE DRAWINGS

FIG 1 depicts an example embodiment of a 36-bit memory word

FIG 2 provides a block diagram of an example embodiment of a processor architecture according to the invention

FIG 3 depicts a user interface from a VHDL simulator

FIG 4 depicts a user interface from a logic analyzer

FIGs 5A and 5B are functional block diagrams of, respectively, a typically prior art processing system and a processing system according to the invention

FIG 6 is a block diagram showing an exemplary computing environment in which aspects of the invention may be implemented

### DETAILED DESCRIPTION OF ILLUSTRATIVE EMBODIMENTS

An example embodiment of a processor that directly executes an instruction set architecture based on the asynchronous pi-calculus will now be described Such a processor provides an engine that may be used to execute programs written in languages based on the asynchronous pi-calculus by closing the semantic gap between language level concepts and machine code level implementations

The pi-calculus is a process algebra in which channel names can act both as transmission media and as transmitted data Thus, the pi-calculus may be used for modeling systems of autonomous agents, known as mobile systems A mobile system is a form of communications network in which individual components interact with each other in ways that they are free to select spontaneously The pi-calculus has been developed to model interactions in concurrent computational systems as diverse as cellular telephone networks, the Internet, and object-oriented software programs It has been adopted as the basis of business process specifications developed by BPMI org, such as Busmess Process Modeling Language (BPML), and in Microsoft's XLANG, a precursor of BPEL4WS

The asynchronous pi-calculus is a subset of the pi-calculus that includes no explicit operators for choice and output-prefixing The basic elements of an example embodiment of an instruction set based on the asynchronous pi-calculus may include the following seven instructions

NEW - An instruction for dynamically creating a new communication channel,

SEND2 - An instruction for asynchronously sending a pair of words (either immediate or indirect),

RECEIVE2 - An instruction for reading a pair of words from a channel,

SELECT - An instruction for listening to a list of channels and then executing some action when data appears on one of the channels,

PAR - An instruction for adding a new process to the list of processes running on the processor,

SERVE - An instruction for spawning off a new process to deal with a data value that has just amved on a channel, and

HALT - An instruction for halting the execution of a process

According to the invention respective hardware circuits may be defined to perform each of the above-described instructions A system according to the invention may include one or more of these instructions Because the software is expected to be wntten in a programming language that is based on the pi-calculus primitives, the machine on which the software is run may be managed using hardware instructions that correspond to the pi-calculus primitives Thus, in a system according to the invention, the pi-calculus model may be applied from "top to bottom " Hardware definition language ("HDL") descriptions of example embodiments of hardware processors for performing each of the instructions are provided in the Appendix hereof

By choosing a dyadic, asynchronous send, synchronous sends may be modeled by passing a "continuation channel" as the second argument When the receiver gets the message, it can then send a dummy value down the continuation channel to the sender to acknowledge the receipt (*i e* , a basic handshake protocol) Note that the RECEIVE2 instruction is really a degenerate case of the SELECT instruction It is provided as a primitive instruction for efficiency because programs typically have many more receives than non-deterministic selects

The use of these seven instructions provides for execution any computable function (*i e* , the processor is "Turing complete") and model data types However, for efficiency, it is preferred that 32-bit signed integers are supported as a basic data-type Channels may also be represented as 32-bit addresses

Programs wntten m the asynchronous pi-calculus are typically a collection of processes that try to communicate over channels or create new channels When one process sends a message over a channel to another process, an interaction may occur during which the message is sent The sending process may be killed (there is no follow-on action for an asynchronous send), and the receiver may resume execution with the new data value it has just received Thus, the execution of a program may correspond to a sequence of interactions between processes

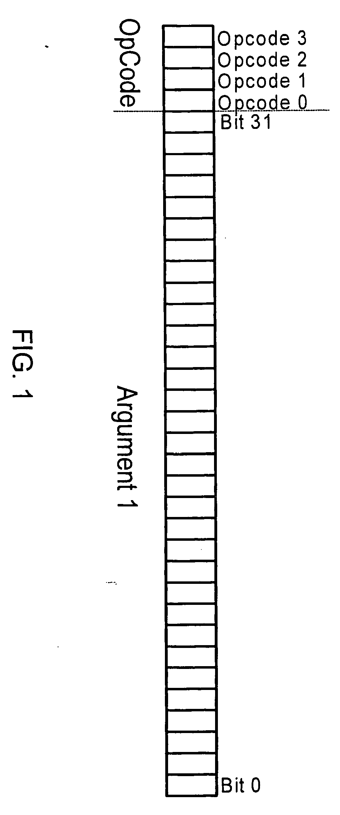

In a preferred embodiment, FPGA hardware that can support memory with 36-bit values may be employed FIG I depicts an example embodiment of a 36-bit memory word As shown, op-codes (and channel status information) may be stored m the four, highest-order bits (*i e* , in the leftmost four bits as shown in FIG 1) 32-bit values may be stored in the remainder of the 36-bit word (*i e* , the rightmost 32 bits)

Typically, the first argument to most of the instructions will be a channel Channels may be represented by an address in the global memory space The instruction set architecture need not identify a channel by its absolute address Instead, channels may be referred to indirectly via "variables" that contain the absolute channel address For example, the NEW op-code may be called with an argument that specifies a local vanable (*i e* , offset from the current "stack frame"), where the address of the newly allocated channel should be deposited

The SEND2 instruction may also specify a channel to use for communication in the same way, *i.e*, by identifying a local variable on the stack frame that contains the actual address of the channel The SEND2 instruction may send indirect arguments, which may specify a local variable, by looking up the contents of the local variable and sending that (*e g,* the absolute address of a channel) This allows channels to be sent over channels, which is a fundamental characteristic of the pi-calculus The SEND2 instruction may also send immediate mode arguments Another mode of the send instruction allows values in nested scopes to be sent This op-code is similar to instructions in the NS32016 processor for walking up stack frames when nested procedures and functions are used in languages like Pascal

A new process may be spawned off by the SERVE command by allocating a new task frame on the heap The first word of this task frame points to the enclosing task frame

As profiling with a larger class of concurrent and distributed applications may be desired a garbage collector may be implemented using known techniques Accordingly, in another embodiment, the existing stack frame could be cloned and extended, which makes garbage collection easier In such an embodiment, the SERVE op-code may be free to instantiate the spawned process on a different processor

The first word of a compiled assembly may contain the address of the initial task frame, and the second word may contain its size This allows the run-time system to work out the initial address of the heap Consequently, program code may be started at memory address 2

Sometimes, one wants to listen on a collection of channels at the same time, and then take appropriate action when data appears on one of them and abandon the other listens This function may be performed by the SELECT instruction, which may be followed by a list of channel and address pairs The processor may examine the channels to listen on in an unspecified order, and, when a channel has data, the corresponding code may be executed

The instruction set may be designed to allow for easily re-locatable machine code by adding an offset to the absolute addresses specified in the arguments to the PAR and SELECT instructions (modulo the address of special channels that stay fixed) The instruction set architecture need not say anything about how the processes are scheduled or how many data items may be accommodated on a particular channel These considerations, including others like fairness, may be set by a specific architecture implementation

The instruction set architecture may be designed to be suitable for control- and protocol-based applications, rather than intensive numerical processing applications For example an efficient way to incorporate a numerically intensive subcomponent would be to design some special purpose hardware for this function, and to communicate with it using exactly the same channel protocol that is used to access regular channels

It should be noted that other instructions could be added to the instruction set without departing from the spirit of the invention Examples of such instructions include synchronous sends, and monadic sends and receives It should be understood, however, that the increase in silicon area required by the inclusion of these additional instructions may not justify the slight gain in performance that may be attnbutable to their inclusion For example, even though synchronous sends may be common in certain kinds of applications, their remote implementation eventually degenerates into some kind of handshaking protocol anyway - which is what the continuation passing based encoding shown above does It may be preferred, therefore, to suffer the cost of a few extra bytes required to store the slightly larger program (and continuation channels) and the loss of a few cycles in the local setting

### Hardware Platform And Processor Architecture

An example embodiment of a hardware platform, or "board," that may be employed in a message passing processor system according to the invention may include a field programmable gate array ("FPGA") connected to various resources that make up a multi-media system The FPGA, which may include one or a plurality (*e.g,* tens) of processors designed according to the invention, may be connected to a plurality of totally independent memory banks (each of which may be, for example, 2MB ZBT memory), video input/output logic, audio input/output, an Ethernet interface, a senal input, a keyboard input, a mouse input, a Compact Flash interface, and various switches and LEDs

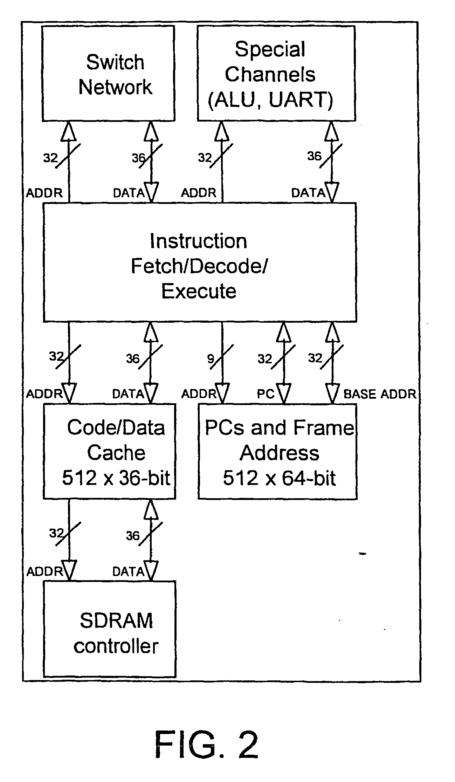

The instruction set architecture described above for a pi-calculus processor does not require any registers in the conventional sense An FPGA architecture provides a large number of dual-ported memories (*e g* , 56 in a preferred embodiment), each of which may be, for example, 18K in size Such FPGAs may be used to represent the channels used in message passing systems, as well as the cache for program and data Main memory may be accessed via "SDRAM" controllers that manage communication with larger memory chips (*e g* , five banks of 2MB in a preferred embodiment) There may be some special channels that provide connections to hardware resources such as, for example, adders, multipliers, and UARTs for senal port communication Channels that are owned by another processor may be reached through a switch network A block diagram of an example embodiment of a processor architecture according to the invention is shown in FIG 2

The logical channels in the user's program may be represented by global addresses m a two-tier hierarchical memory One memory port of the processor may speak directly to a local cache through a fast clocked interface Another port may speak to a memory "switch" that connects one or more of the processors into a global memory space The interface between these memories, however, need not be a fixed-cycle, synchronous interface The interface may be, just like the underlying computation model that the processor supports, a message passing system that asynchronously sends memory transactions (*e g*, messages) requesting the contents of remote memory locations Such decoupling allows scalable memory architectures to be deployed, while keeping a high performance link to a local memory that contains data for a specific processor

The 32-bit address word may be partitioned into higher order bits that identify a specific processor and memory group and lower order bits that identify a location within such a group Thus, one may determine whether or not a channel is performing a communication in a local context by examining the higher order bits When this architecture is used as a stepping stone for compilation onto conventional instruction set architectures, this organization may allow optimizations to replace some channel-based computations with register-based operations

Another feature of the instruction set architecture is that it need not include any arithmetic operations Almost all computing elements are modeled by external processes such as adders and multipliers This may be illustrated by the following snippet of pi-calculus macro assembly, which shows how to add two numbers and then write the result to the serial port

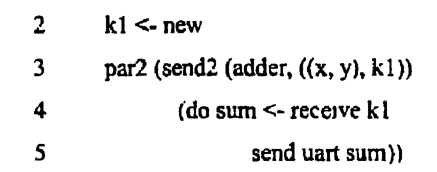

This code creates a new channel for the adder to return the result (k1) It then executes two processes in parallel One process sends to the special adder channel two channels containing values to add (x,y), and the channel to return the result on (kl) The other process listens for the result on the channel k1, and then writes the sum to a UART for display on, for example, a device connected to an RS232 port of the system

It should be understood that such channel-based operations may be transformed into regular x86 or RISC-based ADD operations for execution in a conventional processor By externalizing such instructions, one has a much smaller instruction set, which leads to a much more compact processor, which, in turn allows for the implementation of many more such processors m a given die area

An example, single-processor embodiment of a basic pi-calculus processor according to the invention may include up to 592 logic cells, 308 flip-flops, and three 18K dual-ported memory blocks of a medium sized FPGA (*e g* , the XC2V2000), which represents about 3% of the available logic resources This does not include the resources for the SDRAM controllers, which are typically shared by more than one processor

A prototype of the example embodiment was designed and built to execute every cycle m less than 10 nanoseconds, which gives an operating frequency of 100MHz Though this is a significantly lower operating frequency than that of many known processors, such as Intel's "PENTIUM" processor, for example, performance may be Improved by scaling up the number of simple processors, rather than by making one processor very complex Further, it should be understood that the prototyping technology of FPGAs is typically an order of magnitude slower than a custom silicon implementation Accordingly, it should be understood that a processor according to the invention should execute faster than 1GHz on a 90nm CMOS silicon processor, for example

A switch matrix may be used to communicatively couple a plurality of pi-calculus processors together It is anticipated that, on the largest FPGAs that are currently available, up to 100 pi-calculus processors may be coupled together

An example embodiment of a processor system according to the invention may include a macro assembler, a disassembler, and a code generator for initializing boot memory for the processor In a prototyping environment, the implementation of the processor itself may be in VHDL code, which may be synthesized using well-known tools into logic netlists

The macro-assembler may be designed to plug into the back-end of a pi-calculus program compiler Programs based on the pi-calculus could also be wntten directly m the macro assembler For example, the following snippet of an assembly program encodes the synchronous sending of two messages in the asynchronous pi-calculus framework

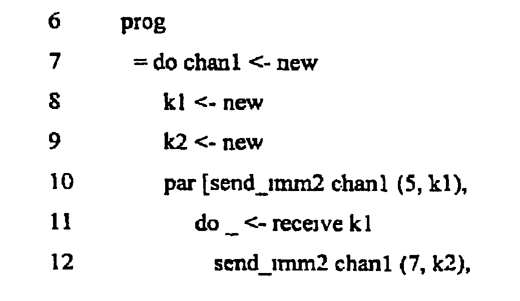

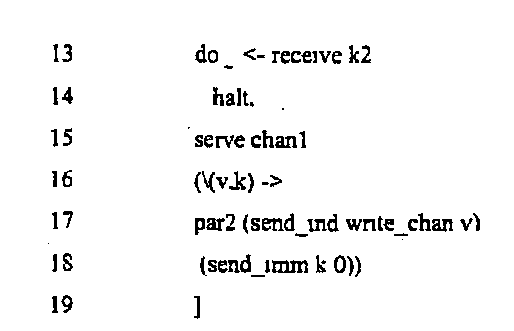

This program creates one communication channel and two continuation channels and then performs the following operations in parallel a) send a pair to chan1 which contains the value 5 and the continuation k1, b) wait for a response on continuation k1 and then send a pair to chan1 which contains the value 7 and the continuation k2, c) wait for a response on continuation k2 and then kills that process, and c) wait for communications on chan1 and every time some data is received a separate processes is forked off to deal with it (in this case write some output by writing to the special channel FFEE)

This program may be compiled into the following assembly code

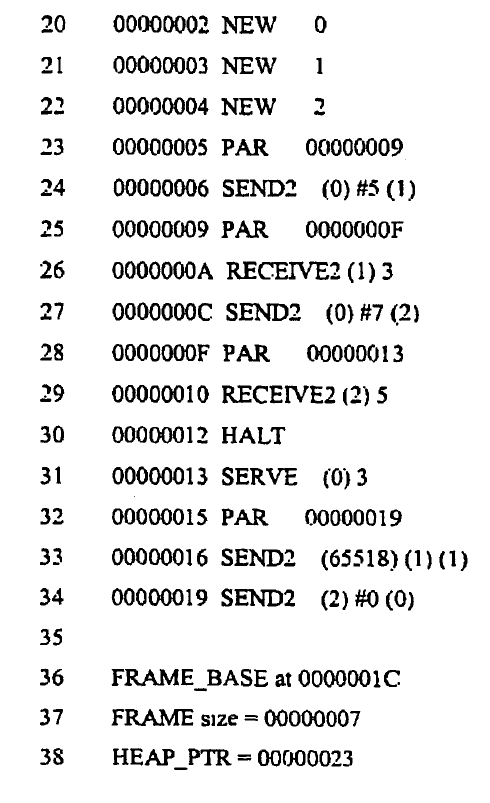

Although the processor may have a rudimentary operating system kernel there may be no need to wnte code to manage multiple processes, context switches, *etc* These tasks may be performed by the processor The concurrent possibilities of the code may be made evident through the use of the PAR and SERVE op-codes The system may then be free to run the code on any given processor or even at a remote location

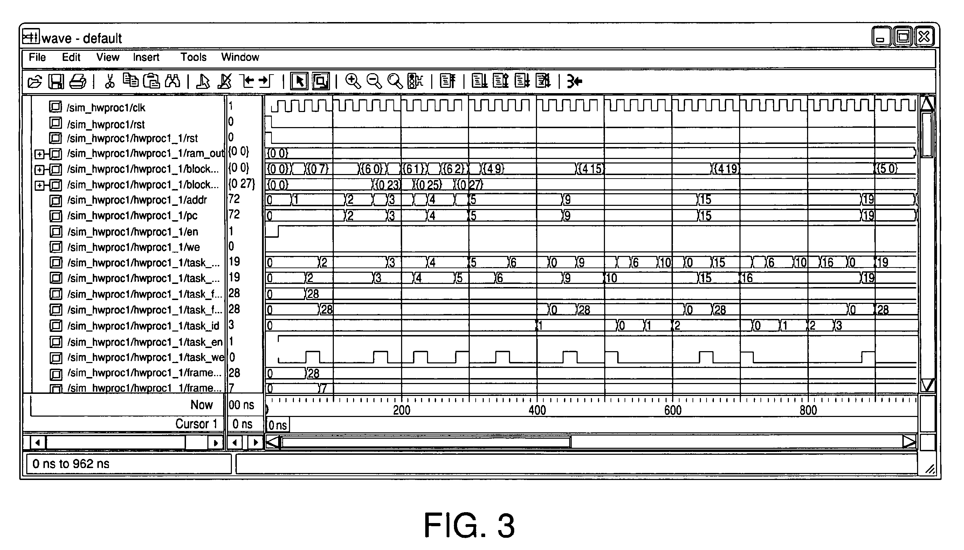

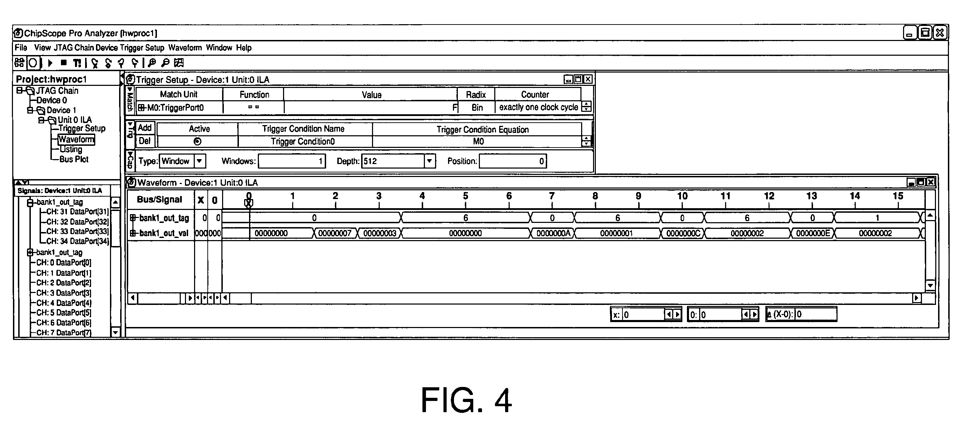

The generated assembly code may be converted into initialization information for the boot memory of the processor, and the cycle accurate execution of this program may be determined using a VHDL simulator that shows that these instructions complete in 800 nanoseconds (see FIG 3) An experimental setup has been used to execute the compiled pi-calculus programs on the actual hardware described above, and their progress monitored through flashing LEDs. HyperTerminal, *etc*, or by using a logic analyzer (see FIG 4) to inspect internal state

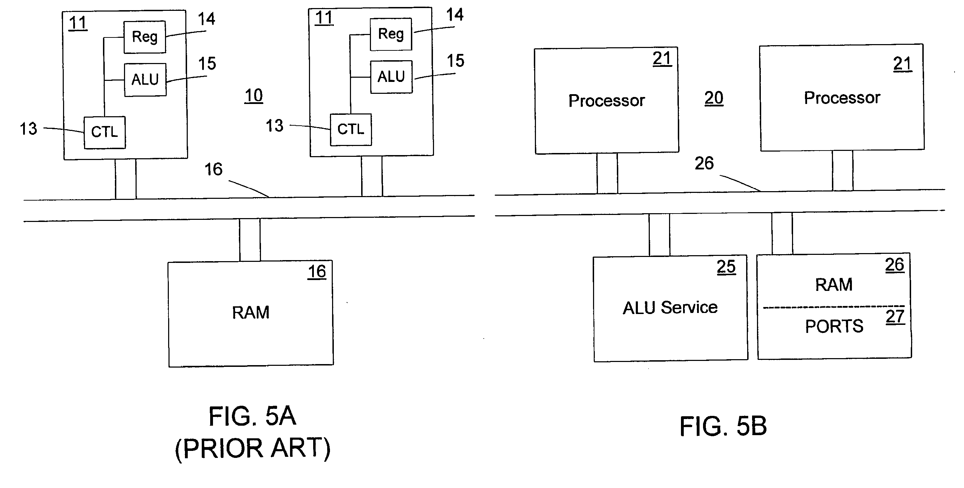

FIGs 5A and 5B are functional block diagrams of, respectively, a typically prior art processing system 10 and a processing system 20 according to the invention As shown in FIG 5A. a plurality of processors 11 may be coupled to communications pathway 12, which may be a bus, for example Each processor 11 may include a control unit 13, data registers 14, and an arithmetic logic unit (ALU) 15 The control unit 13 performs instruction execution The data registers 14 contain data manipulated by the control unit The ALU 15 performs addition and subtraction, logic operations, masking, and shifting (multiplication and division) A random access memory ("RAM") 16 is also coupled to the communications pathway 12 The processors 11 can access (*i*.*e*. read from and write to) the RAM 16 The processors share access to the RAM Each processor executes a set of program instructions sequentially, and accesses its own ALU and data registers, and the shared memory as it needs them

As shown in FIG 5B, a plurality of instruction processors 21 may be coupled to a communications pathway 22 RAM 26, ALU service 25, a ports 27 may also be coupled to the communications pathway 22 The processors 21 share access to the ALU service and the RAM The processors 21 also share the ports 27 In a system 20 according to the invention, a program may be executed via messages passed throughout the network For example, an instruction processor 21 may receive a message that includes an instruction stream The instruction processor 21 may act on the instruction stream and, in the process, may access the shared RAM 26, shared ALU service 25, and shared ports 27 The instruction processors may read data from the ports or put data onto the ports Such a system may be scaled by simply adding more instruction processors 21 to the communications network

### Exemplary Computing Environment

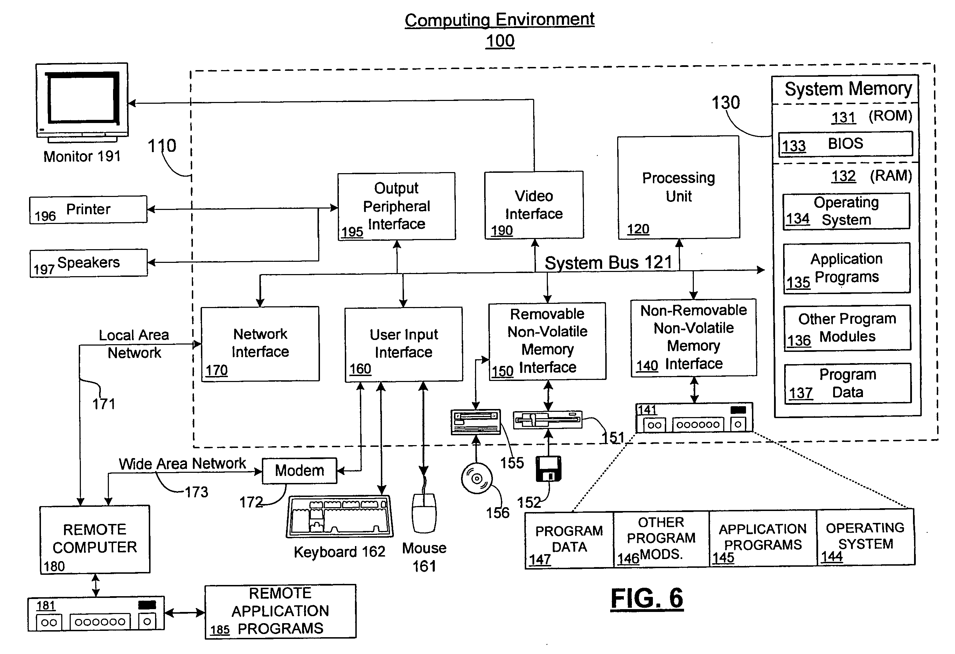

FIG 6 illustrates an example of a suitable computing system environment 100 in which the invention may be implemented The computing system environment 100 is only one example of a suitable computing environment and is not intended to suggest any limitation as to the scope of use or funcnonality of the invention Neither should the computing environment 100 be interpreted as having any dependency or requirement relating to any one or combination of components illustrated in the exemplary operating environment 100

The invention is operational with numerous other general purpose or special purpose computing system environments or configurations Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like

The invention may be described in the general context of computer-executable instructions, such as program modules, being executed by a computer Generally, program modules include routines, programs, objects, components, data structures, etc that perform particular tasks or implement particular abstract data types The invention may also be practiced in distributed computing environments where tasks are performed by remote processing devices that are linked through a communications network or other data transmission medium In a distributed computing environment, program modules and other data may be located in both local and remote computer storage media including memory storage devices

With reference to FIG 6, an exemplary system for implementing the invention includes a general purpose computing device in the form of a computer 110 Components of computer 110 may include, but are not limited to, a processing unit 120, a system memory 130, and a system bus 121 that couples various system components including the system memory to the processing unit 120 The system bus 121 may be any of several types of bus structures including a memory bus or memory controller, a peripheral bus, and a local bus using any of a variety of bus architectures By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus)

Computer 110 typically includes a variety of computer readable media Computer readable media can be any available media that can be accessed by computer 110 and includes both volatile and non-volatile media, removable and non-removable media By way of example, and not limitation, computer readable media may compnse computer storage media and communication media Computer storage media includes both volatile and non-volatile removable and non-removable media implemented in any method or technology for storage of information such as computer readable instructions data structures, program modules or other data Computer storage media includes, but is not limited to, RAM, ROM, EEPROM flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110 Communication media typically embodies computer readable instructions, data structures, program modules or other data in a modulated data signal such as a camer wave or other transport mechanism and includes any information delivery media The term "modulated data signal" means a signal that has one or more of its characteristics set or changed in such a manner as to encode information in the signal By way of example, and not limitation, communication media includes wired media such as a wired network or direct-wired connection and wireless media such as acoustic, RF, infrared and other wireless media Combinations of any of the above should also be included within the scope of computer readable media

The system memory 130 includes computer storage media in the form of volatile and/or non-volatile memory such as ROM 131 and RAM 132 A basic input/output system 133 (BIOS), containing the basic routines that help to transfer information between elements within computer 110, such as during start-up, is typically stored in ROM 131 RAM 132 typically contains data and/or program modules that are immediately accessible to and/or presently being operated on by processing unit 120 By way of example, and not limitation. FIG 6 illustrates operating system 134, application programs 135, other program modules 136, and program data 137

The computer 110 may also include other removable/non-removable, volatile/non-volatile computer storage media By way of example only, FIG 6 illustrates a hard disk dnve 140 that reads from or wntes to non-removable, non-volatile magnetic media, a magnetic disk drive 151 that reads from or writes to a removable, non-volatile magnetic disk 152, and an optical disk dnve 155 that reads from or writes to a removable, non-volatile optical disk 156, such as a CD-ROM or other optical media Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like The hard disk dnve 141 is typically connected to the system bus 121 through a non-removable memory interface such as interface 140, and magnetic disk drive 151 and optical disk dnve 155 are typically connected to the system bus 121 by a removable memory interface, such as interface 150

The dnves and their associated computer storage media provide storage of computer readable instructions, data structures, program modules and other data for the computer 110 In FIG 6, for example, hard disk dnve 141 is illustrated as storing operating system 144, application programs 145, other program modules 146, and program data 147 Note that these components can either be the same as or different from operating system 134. application programs 135. other program modules 136, and program data 137 Operating system 144, application programs 145, other program modules 146, and program data 147 are given different numbers here to illustrate that, at a minimum, they are different copies A user may enter commands and information into the computer 110 through input devices such as a keyboard 162 and pointing device 161, commonly referred to as a mouse, trackball or touch pad Other input devices (not shown) may include a microphone, joystick, game pad, satellite dish, scanner, or the like These and other input devices are often connected to the processing unit 120 through a user input interface 160 that is coupled to the system bus, but may be connected by other interface and bus structures, such as a parallel port, game port or a universal senal bus (USB) A monitor 191 or other type of display device is also connected to the system bus 121 via an interface, such as a video interface 190 In addition to the monitor, computers may also include other peripheral output devices such as speakers 197 and printer 196, which may be connected through an output peripheral interface 195

The computer 110 may operate in a networked environment using logical connections to one or more remote computers, such as a remote computer 180 The remote computer 180 may be a personal computer, a server a router, a network PC, a peer device or other common network node, and typically includes many or all of the elements described above relative to the computer 110, although only a memory storage device 181 has been illustrated in FIG 6 The logical connections depicted include a LAN 171 and a WAN 173, but may also include other networks Such networking environments are commonplace in offices, enterprise-wide computer networks, intranets and the internet

When used in a LAN networking environment, the computer 110 is connected to the LAN 171 through a network interface or adapter 170 When used in a WAN networking environment, the computer 110 typically includes a modem 172 or other means for establishing communications over the WAN 173, such as the internet The modem 172, which may be internal or external, may be connected to the system bus 121 via the user input interface 160 or other appropriate mechanism In a networked environment, program modules depicted relative to the computer 110, or portions thereof, may be stored in the remote memory storage device By way of example, and not limitation, FIG 6 illustrates remote application programs 185 as residing on memory device 181 It will be appreciated that the network connections shown are exemplary and other means of establishing a communications link between the computers may be used

As mentioned above, while exemplary embodiments of the present invention have been described m connection with various computing devices, the underlying concepts may be applied to any computing device or system

The various techniques described herein may be implemented in connection with hardware or software or, where appropnate, with a combination of both Thus, the methods and apparatus of the present invention, or certain aspects or portions thereof, may take the form of program code (i e, instructions) embodied in tangible media, such as floppy diskettes, CD-ROMs hard drives, or any other machine-readable storage medium, wherein, when the program code is loaded into and executed by a machine, such as a computer, the machine becomes an apparatus for practicing the invention In the case of program code execution on programmable computers, the computing device will generally include a processor, a storage medium readable by the processor (including volatile and non-volatile memory and/or storage elements), at least one input device, and at least one output device The program(s) can be implemented in assembly or machine language, if desired In any case, the language may be a compiled or interpreted language, and combined with hardware implementations

The methods and apparatus of the present invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, or the like, the machine becomes an apparatus for practicing the invention When implemented on a general-purpose processor, the program code combines with the processor to provide a unique apparatus that operates to invoke the functionality of the present invention Additionally, any storage techniques used in connection with the present invention may invariably be a combination of hardware and software

Thus, there have been described hardware processors designed to directly execute machine code that is based on the asynchronous pi-calculus Though the invention has been described in connection with certain preferred embodiments depicted in the various figures it should be understood that other similar embodiments may be used, and that modifications or additions may be made to the described embodiments for practicing the invention without deviating therefrom The invention, therefore, should not be limited to any single embodiment but rather should be construed in breadth and scope in accordance with the following claims

For example, it should be understood that FPGAs provide the potential for "virtual hardware," *i e*, dynamically swapping hardware into and out of the chip at run-time Though there have been many hand-crafted attempts to exploit this capability, there has been no satisfactory model for dynamic reconfiguration The applicability of a mobile process algebra, such as the pi-calculus, for example, may be investigated for modeling such systems A tamed, reconfigurable technology could be very useful for a future operating system that could dynamically decide which operations need hardware acceleration

Another recent technological innovation is the use of very high speed serial links Silicon chips now have access to multiple 10GB senal transceivers, which may be used to implement high-speed communication - inter-chip, board level, and beyond Harnessing this power is likely to require careful design and implementation of protocols for loosely-coupled systems

Further, it should be understood that, in the example architectures described above, a second message may not be sent (*i*.*e*., placed in a channel) if a first message is already waiting in that channel Instead, it may need to wait until the first message has been removed Accordingly, the example architectures described above may be considered by some not to be "asynchronous" in the purest sense, such as where the receive command has a timeout but the send command does not, and when the send command posts a message, the sender knows nothing about it It should be understood that it should be straightforward to change such a "quasi-asynchronous" architecture into a synchronous one *(e g ,* where the sender posts a message, the receiver executes a function, and the sender gets back the answer to that function) A synchronous architecture may be easier to implement in code, and therefore, may be more useful in certain applications than an asynchronous architecture

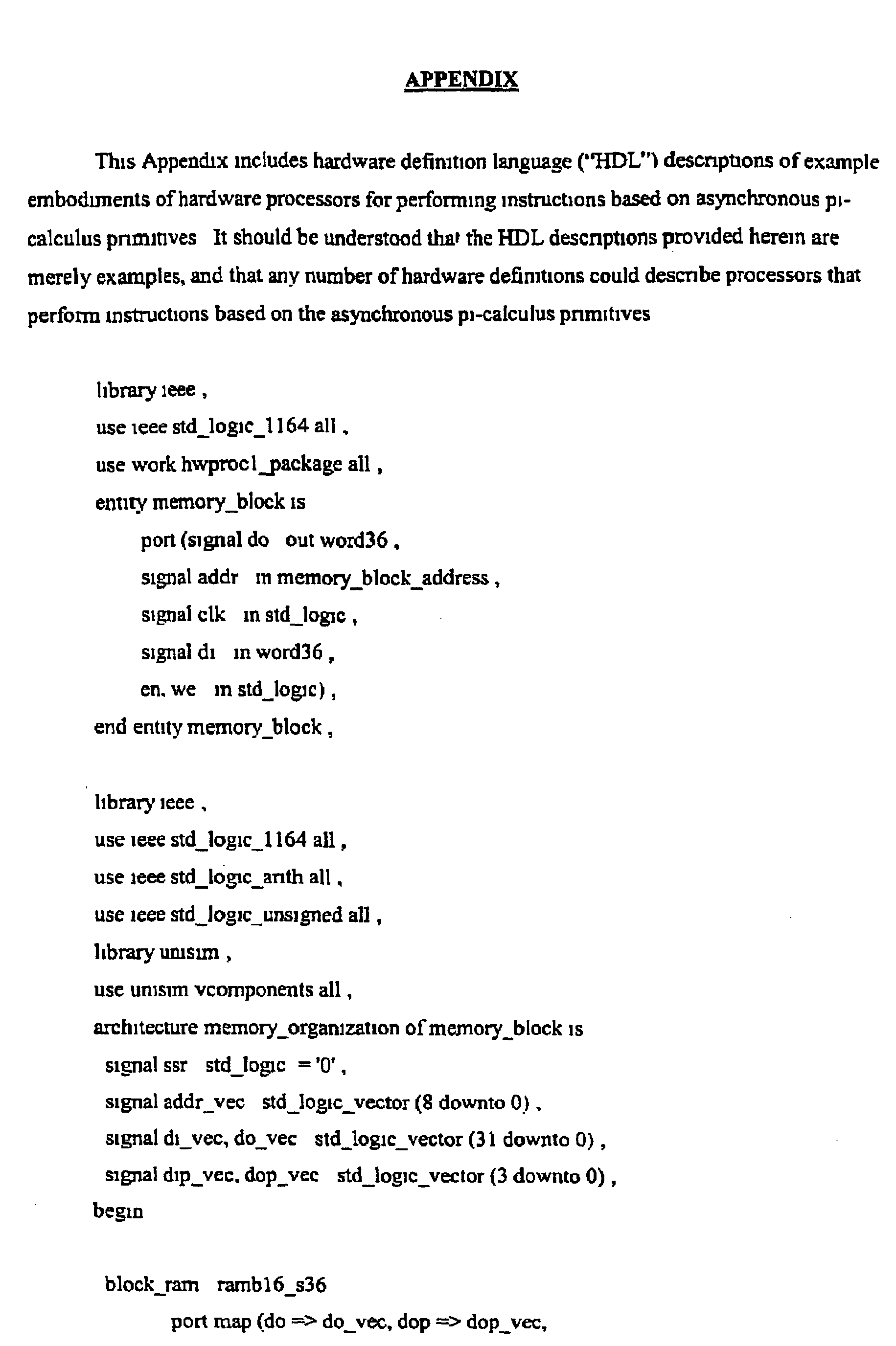

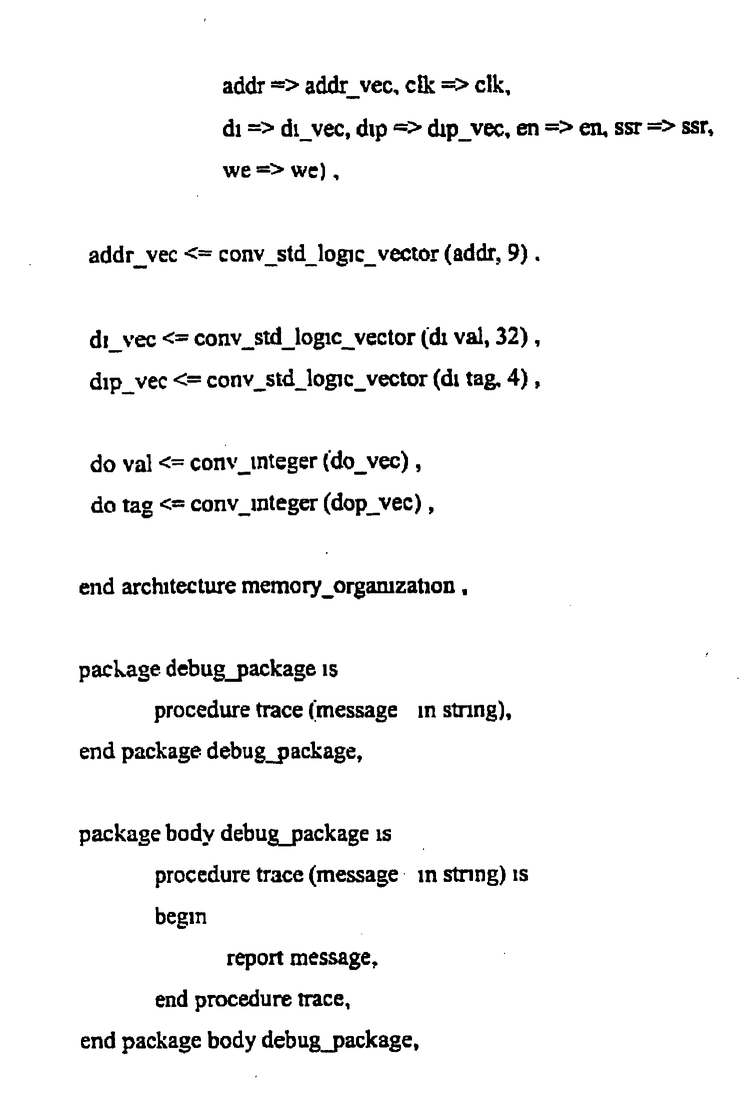

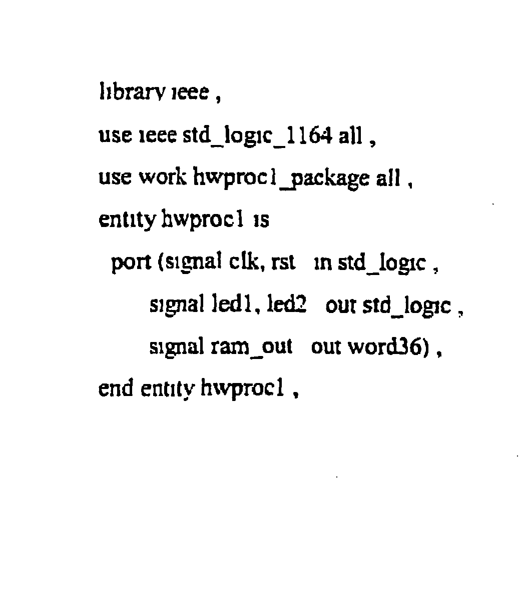

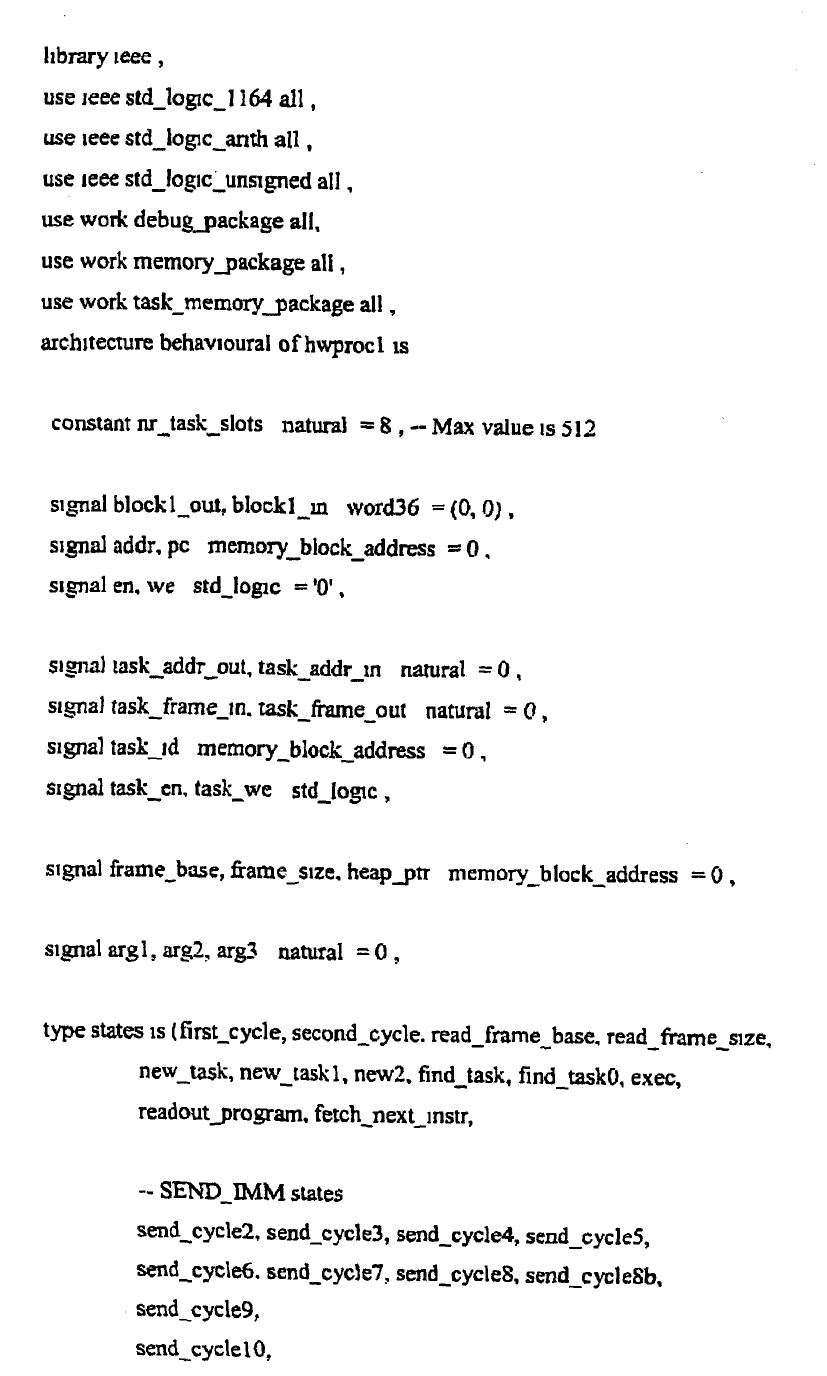

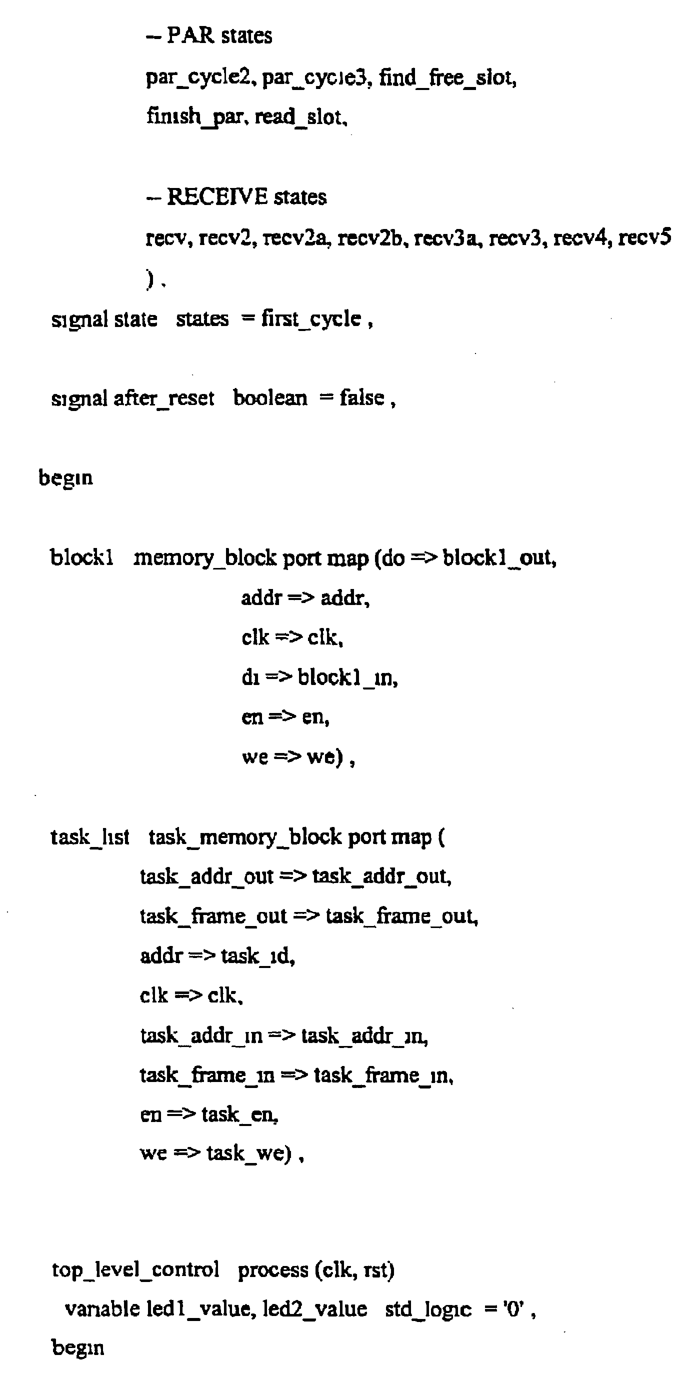

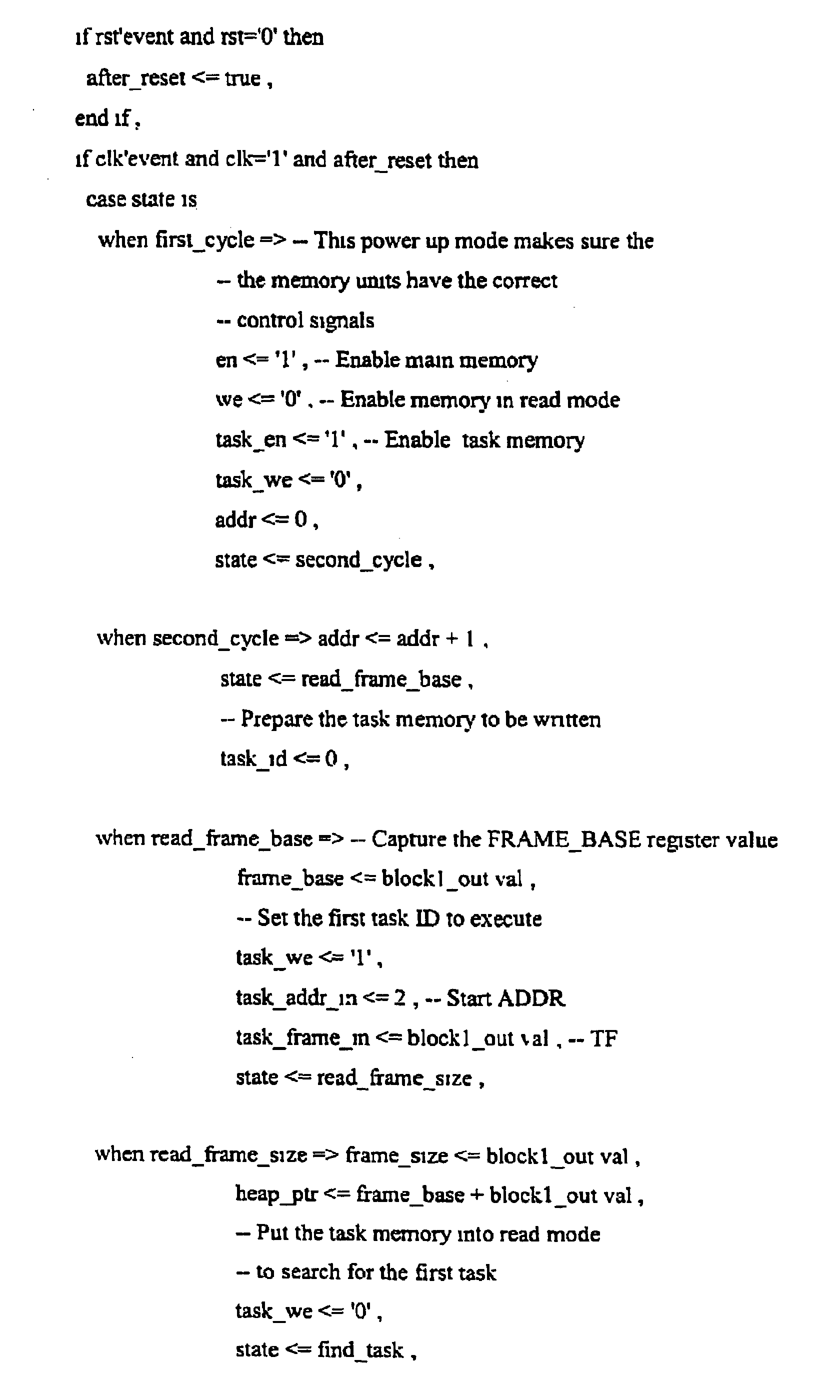

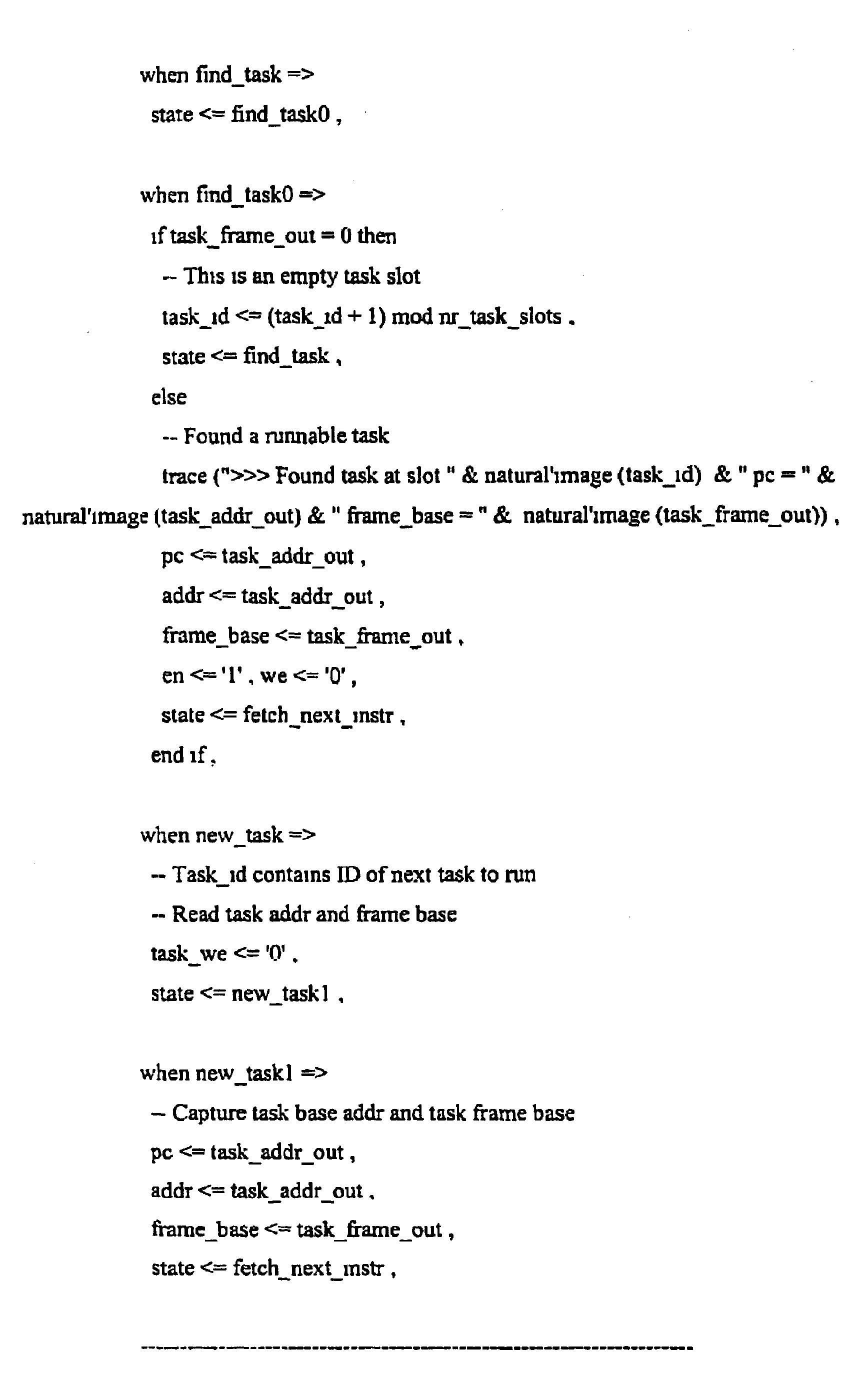

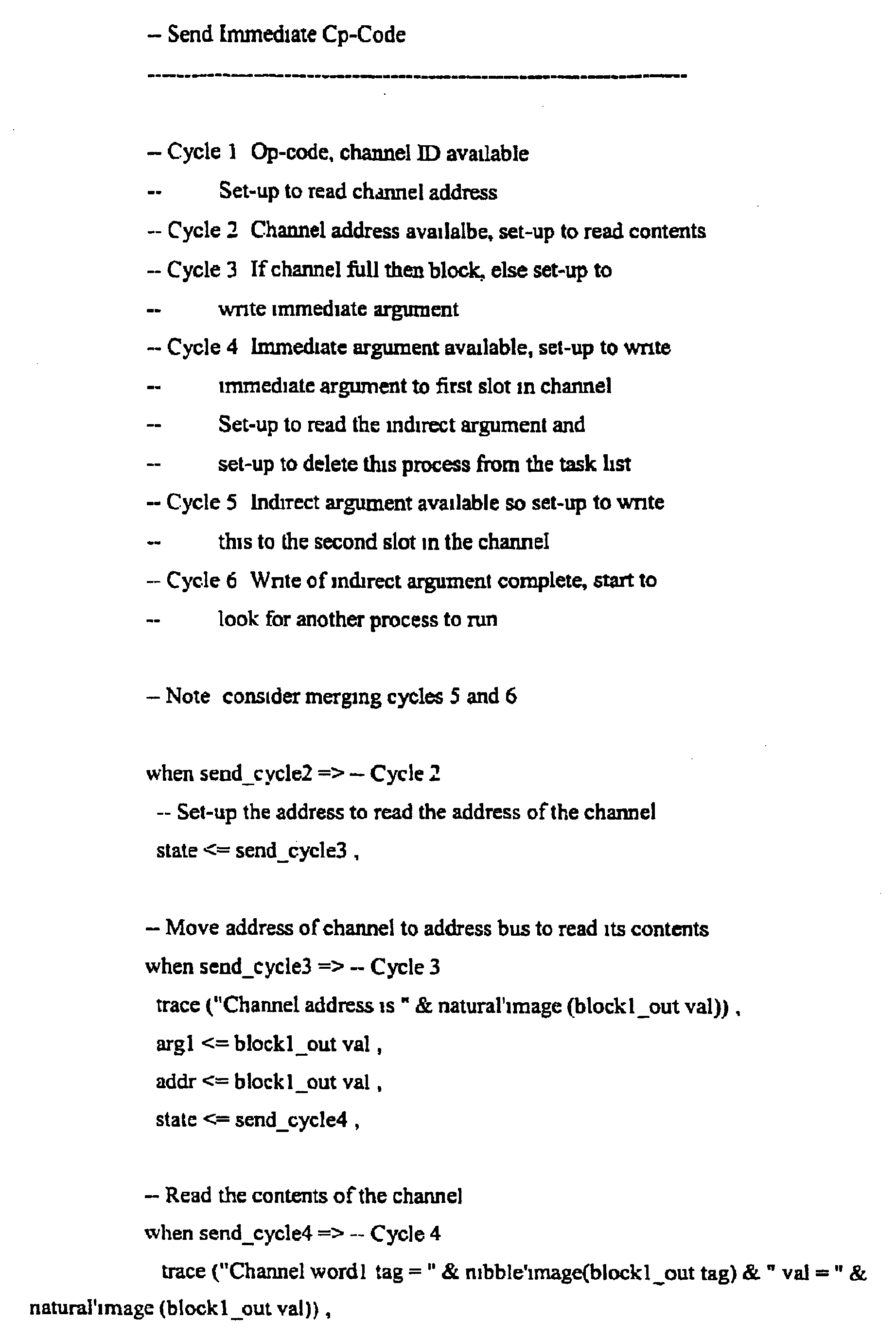

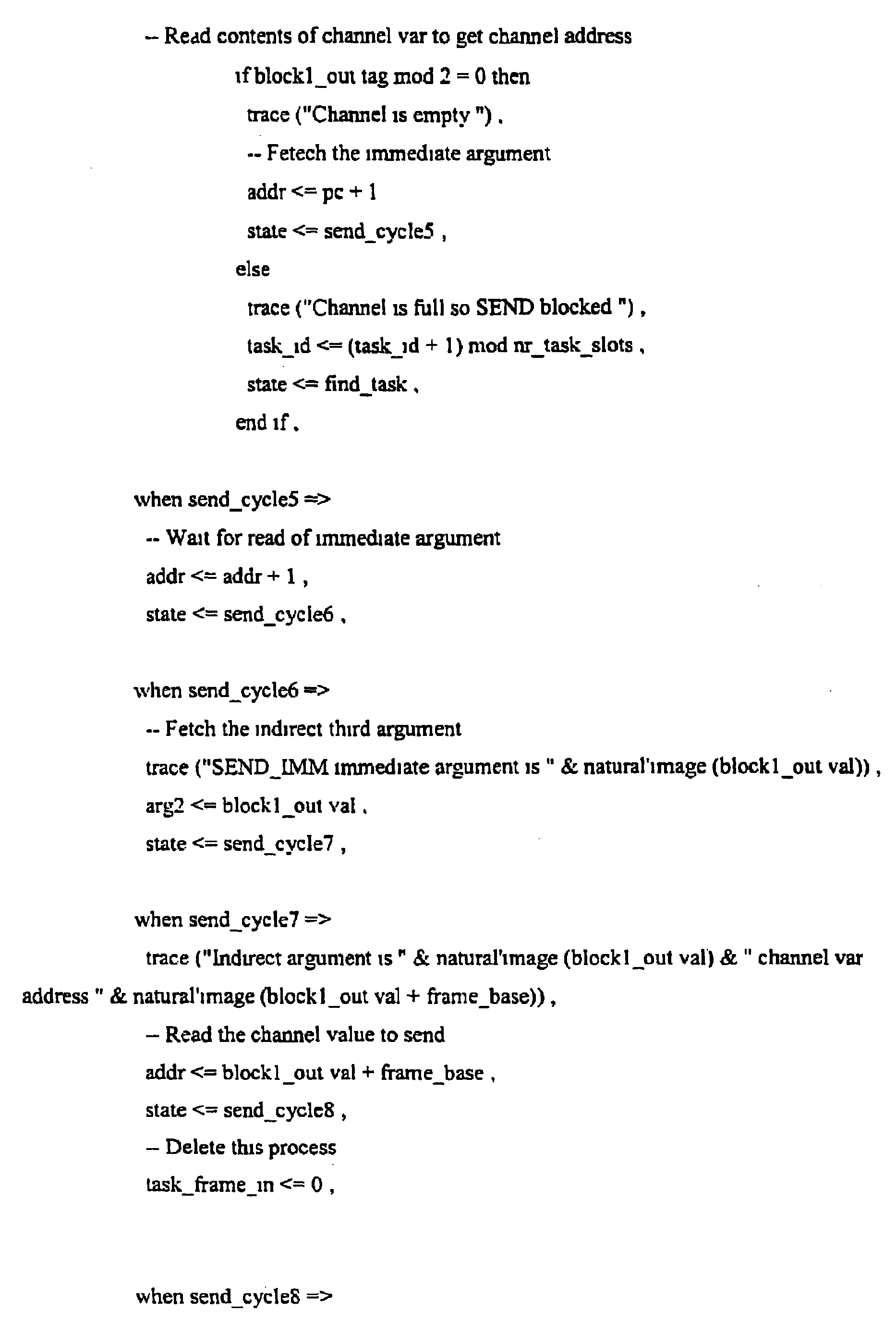

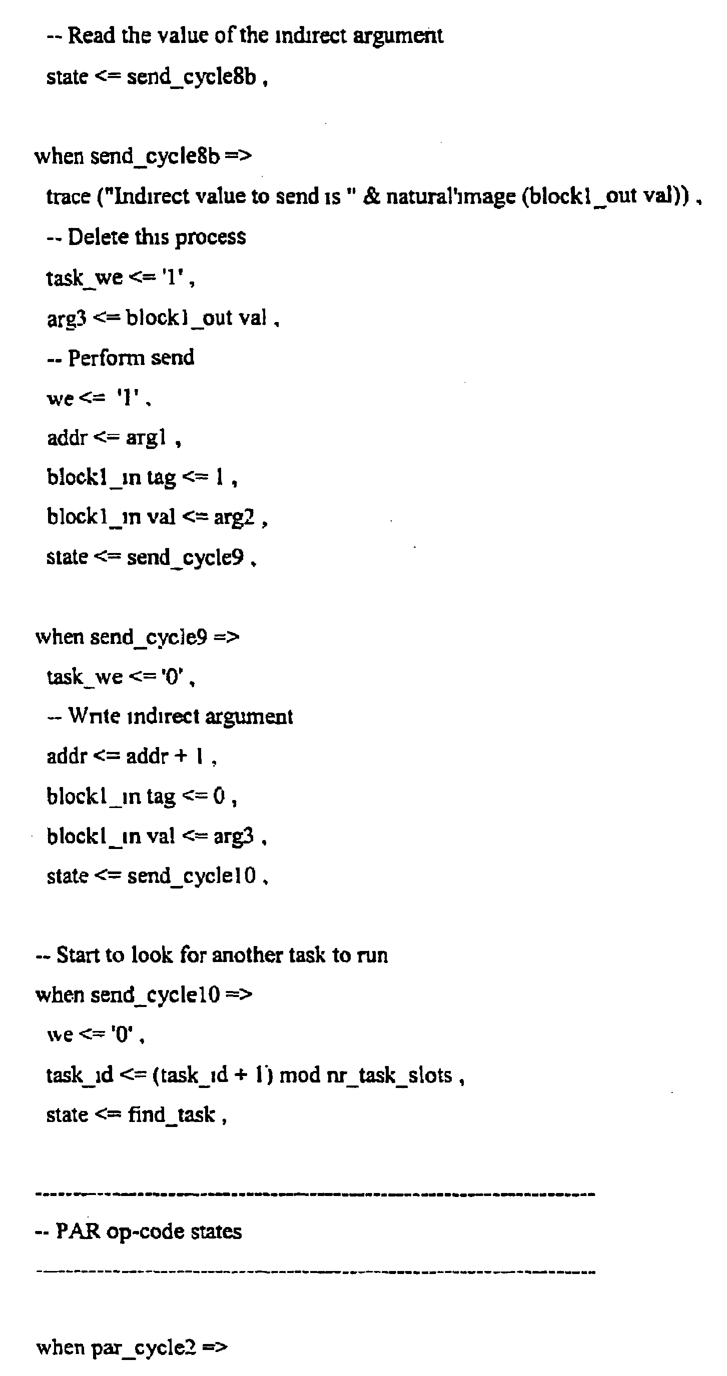

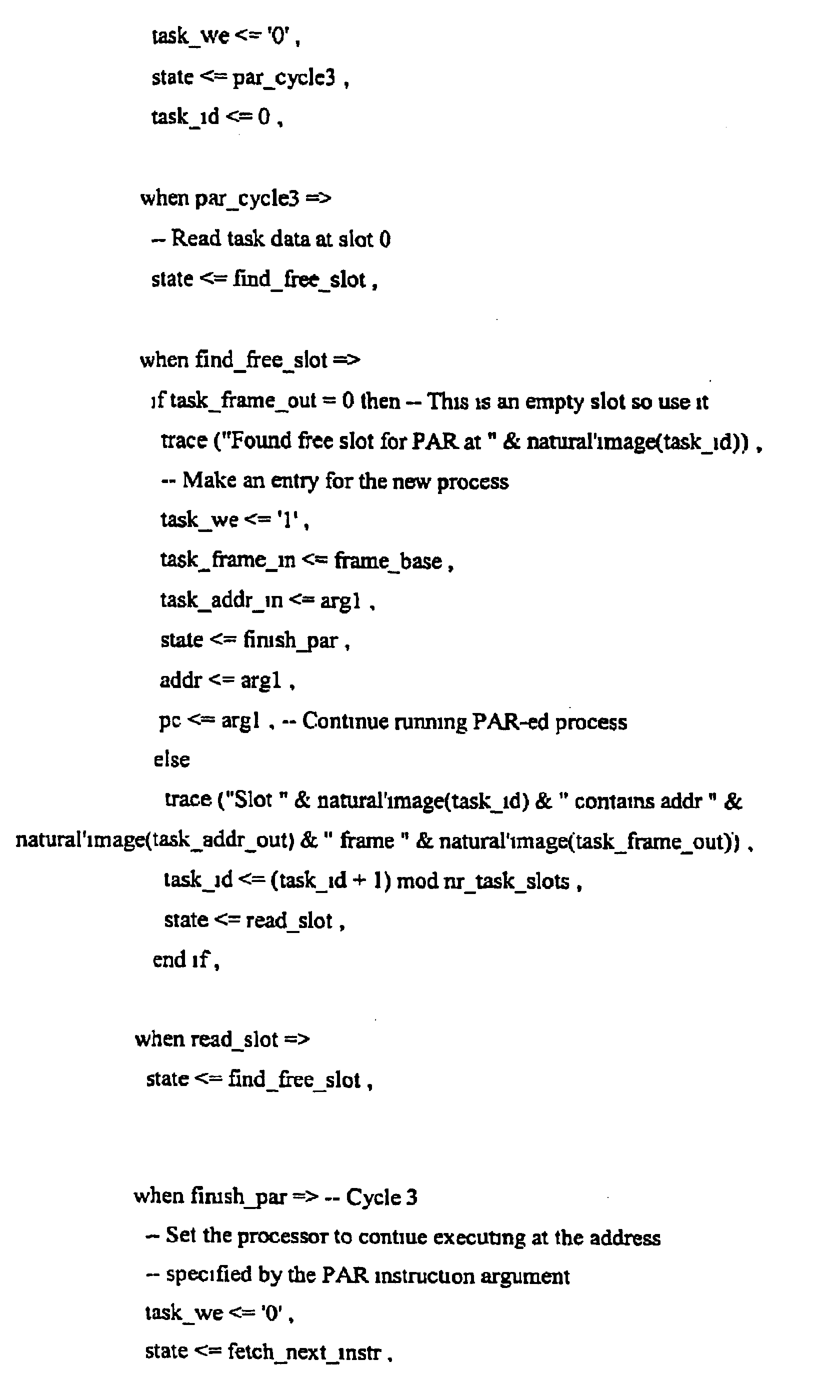

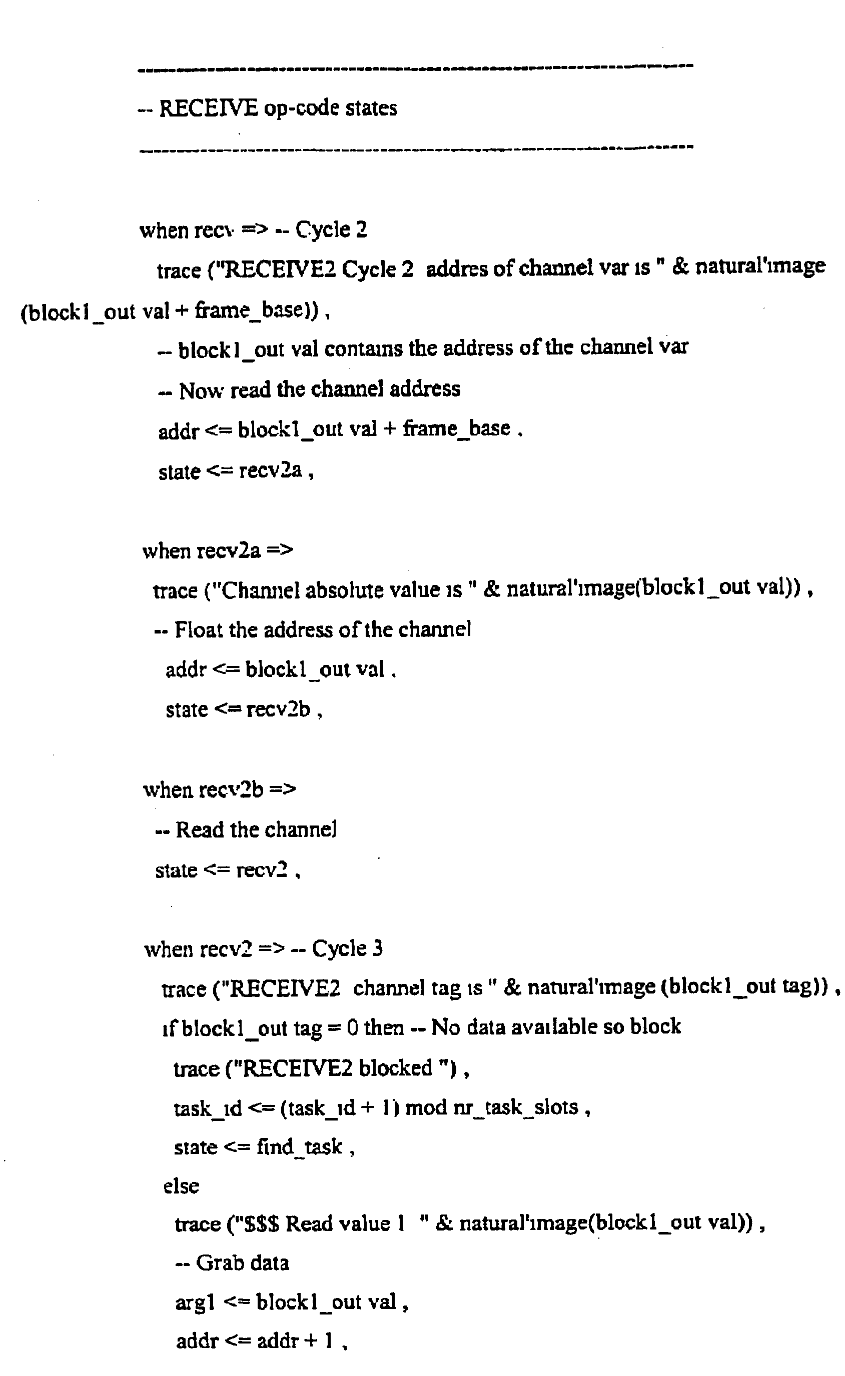

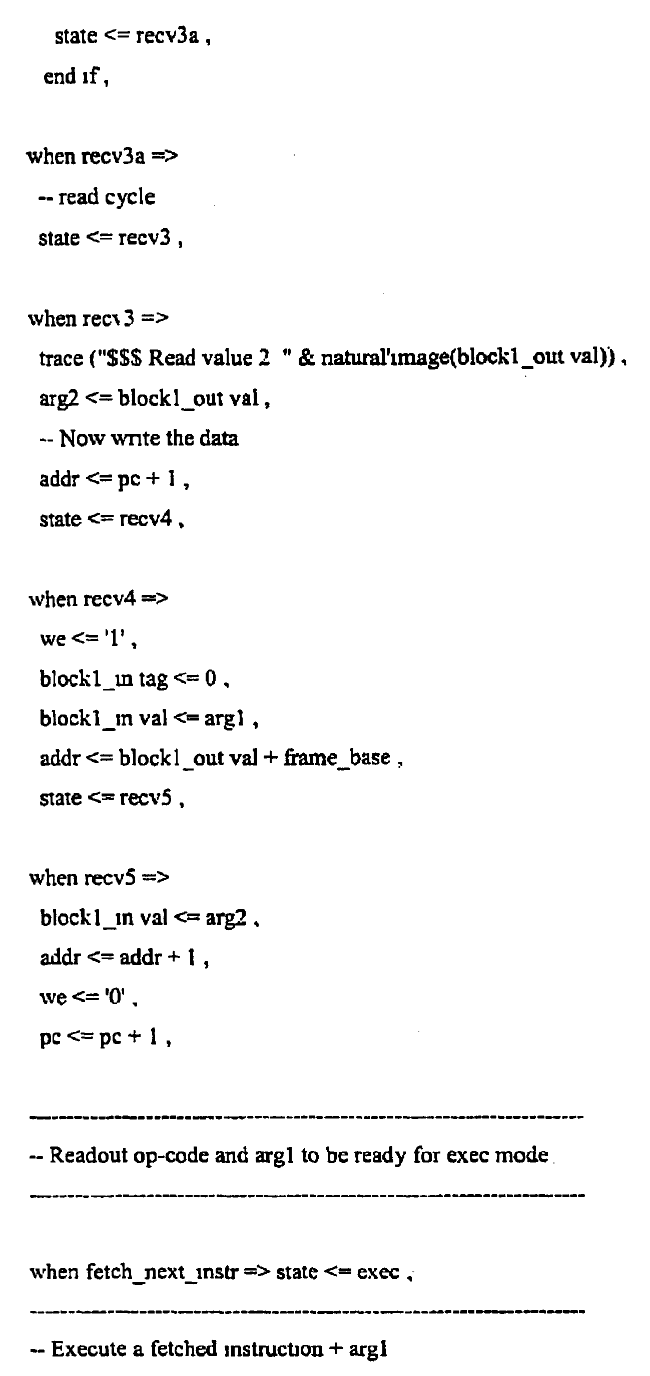

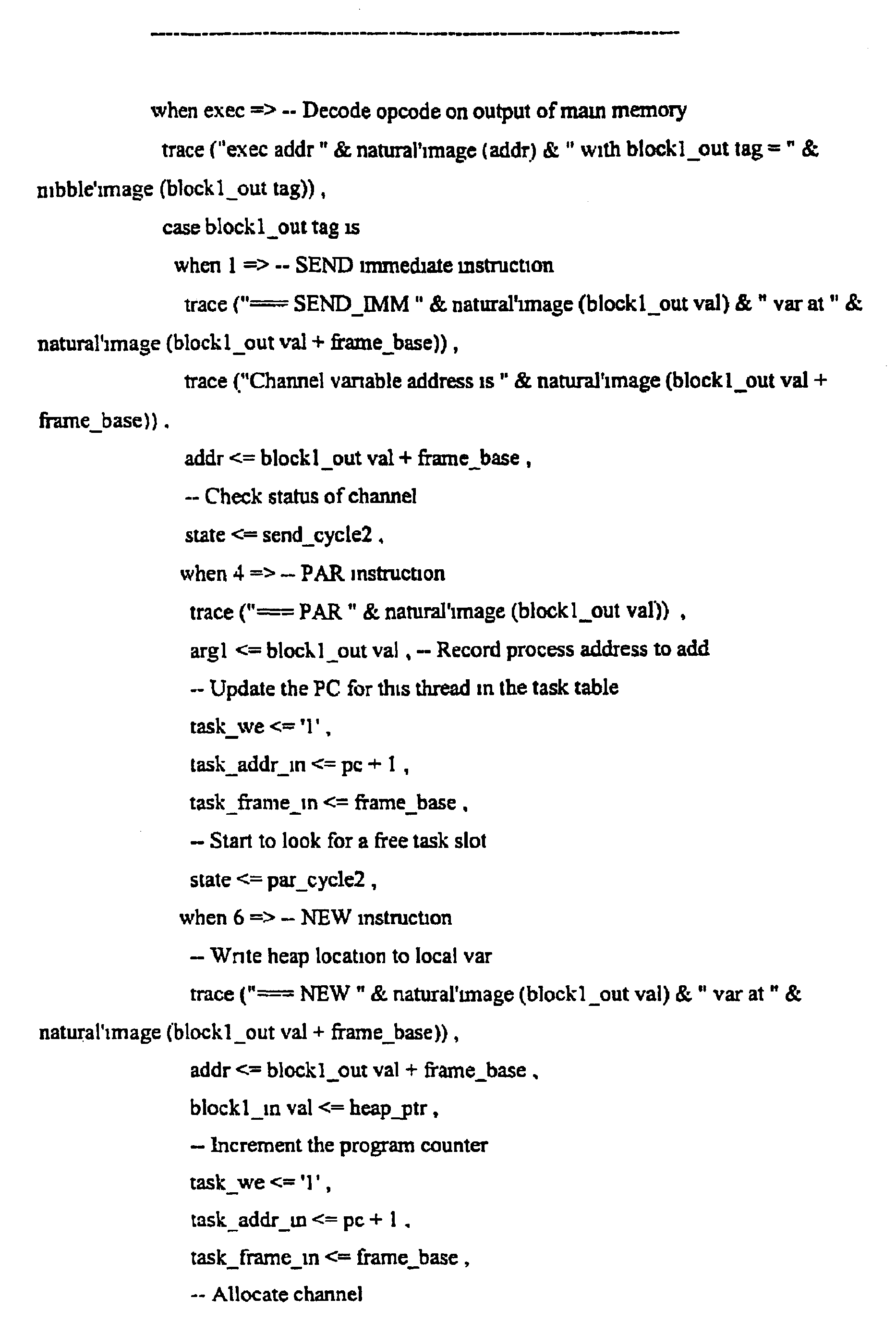

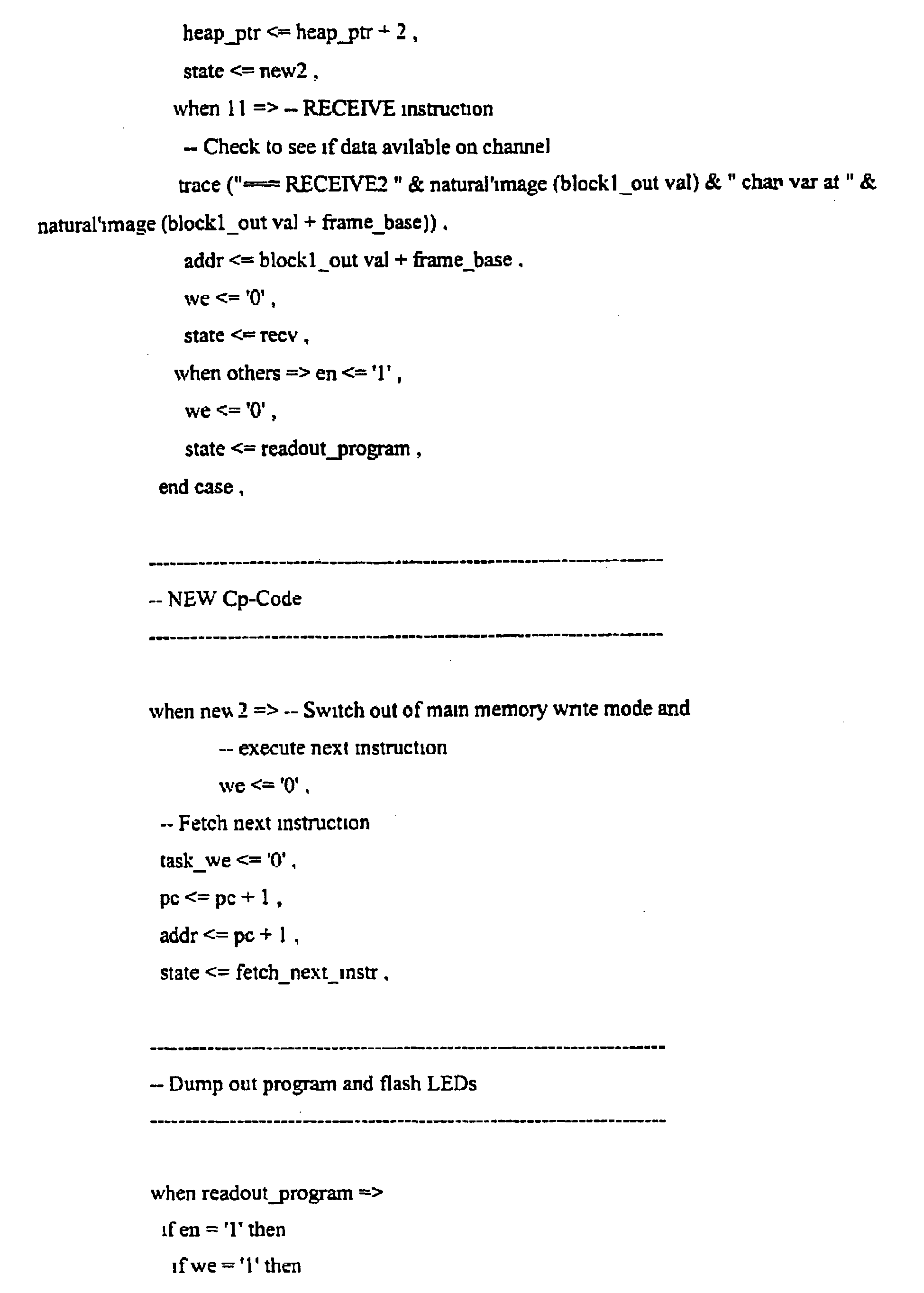

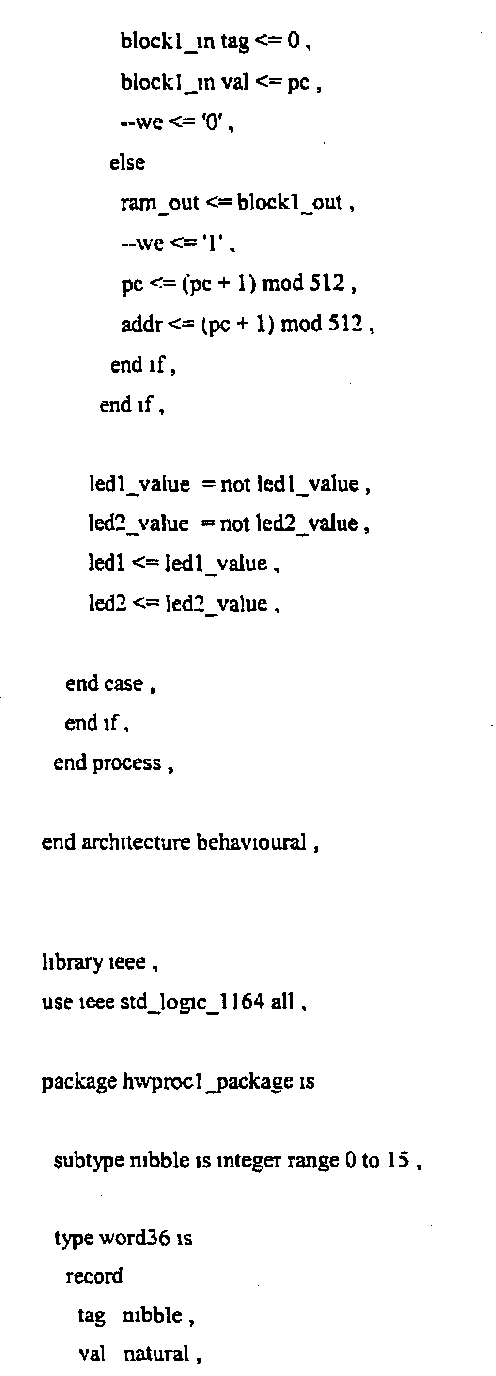

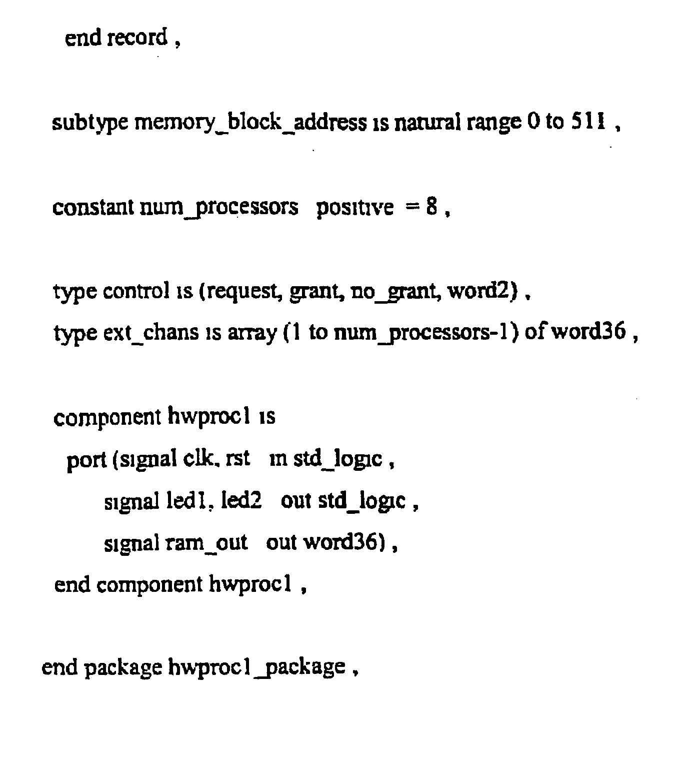

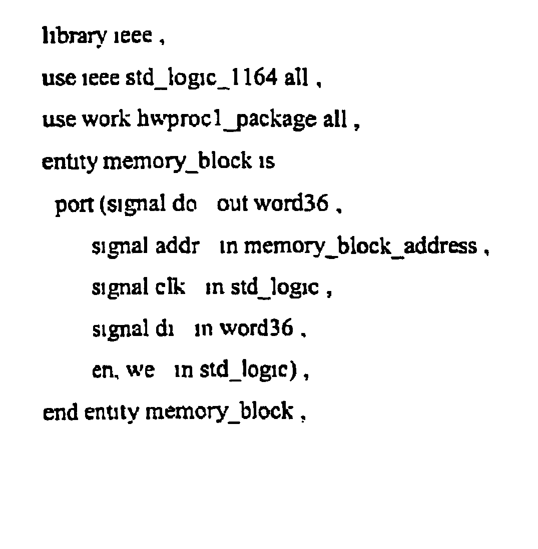

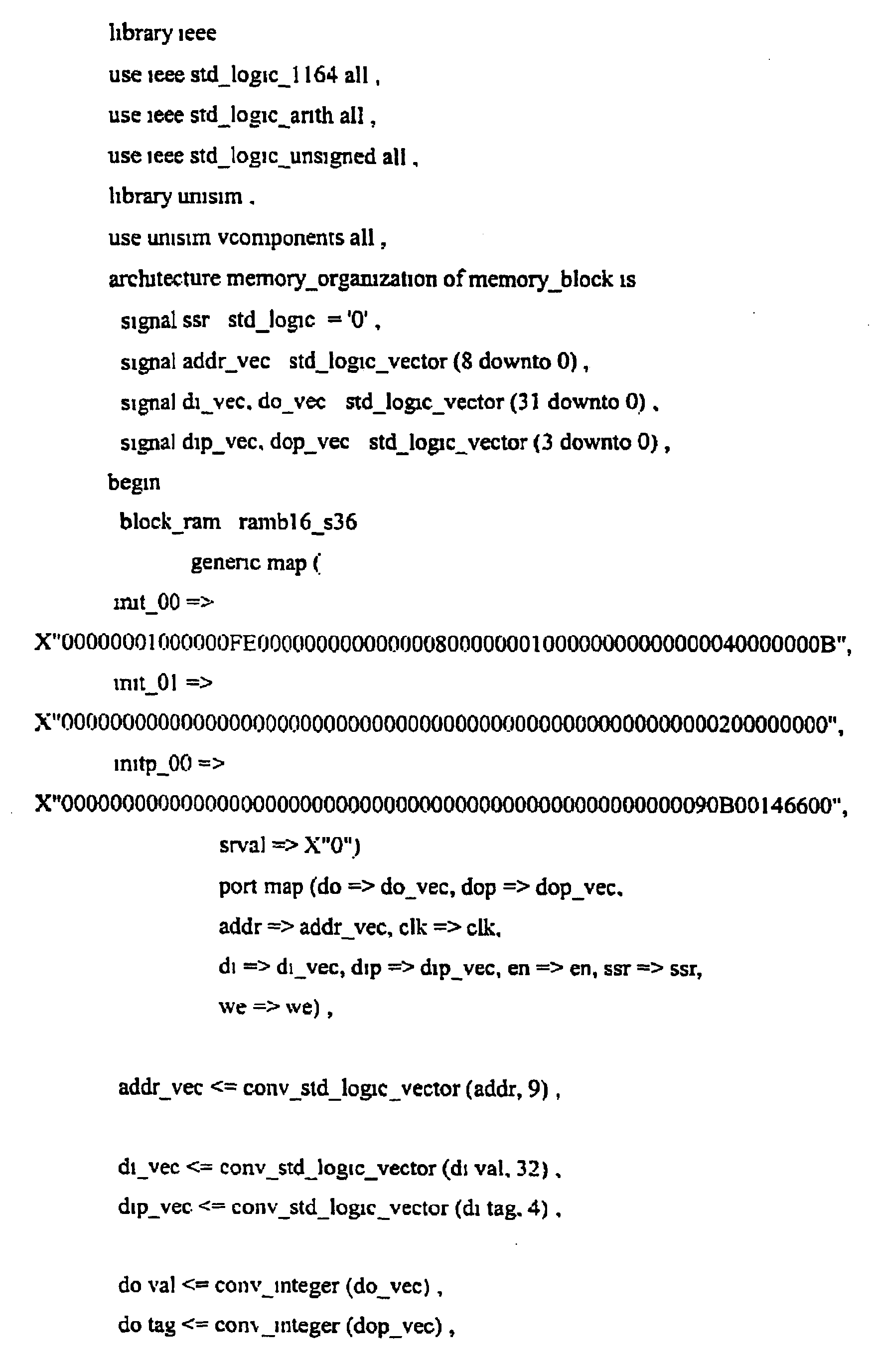

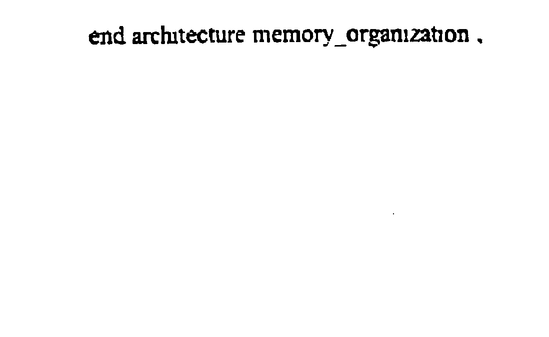

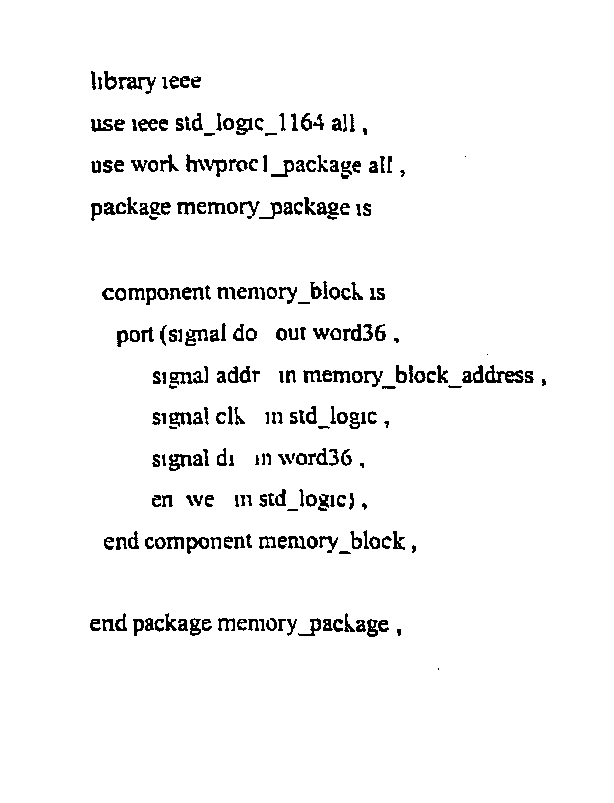

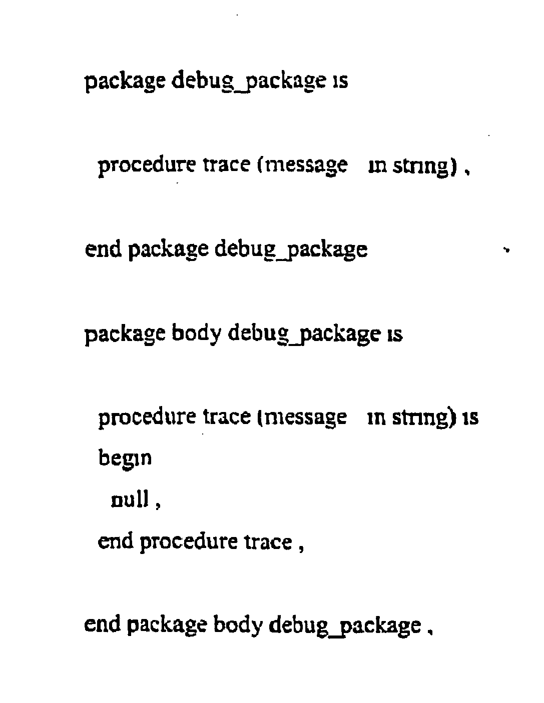

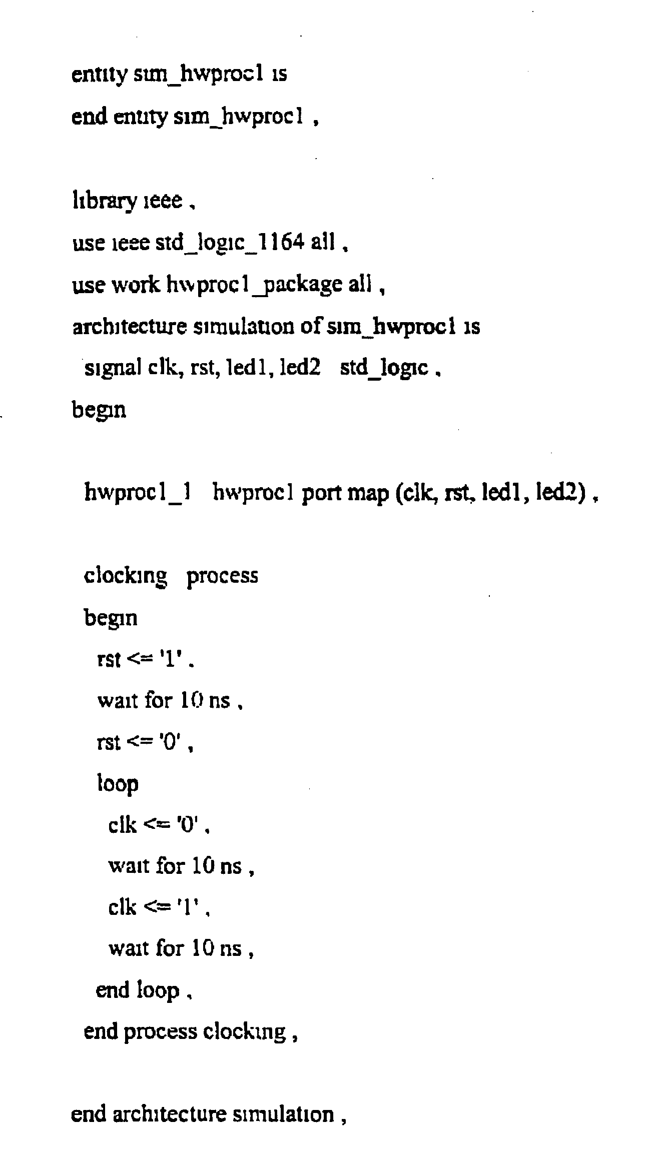

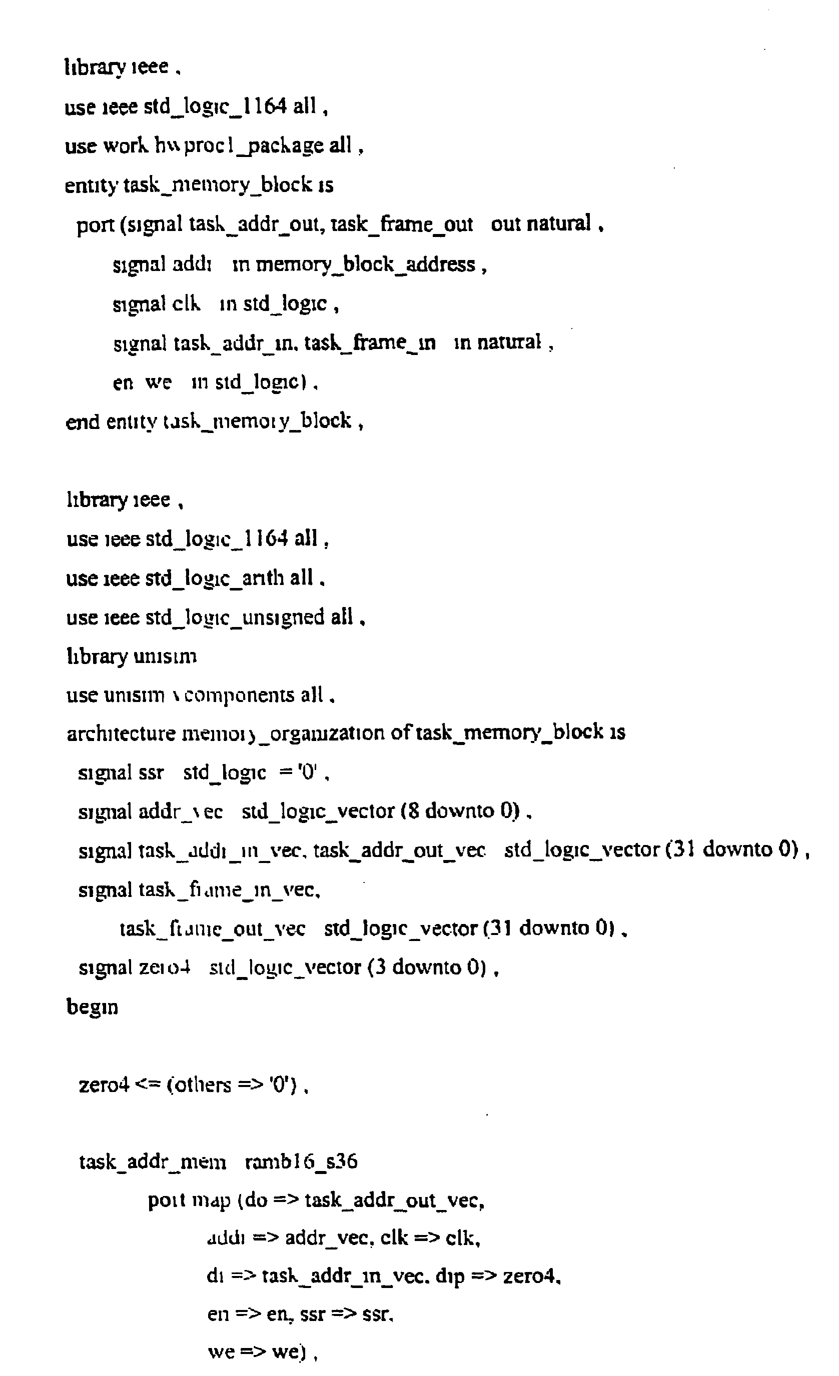

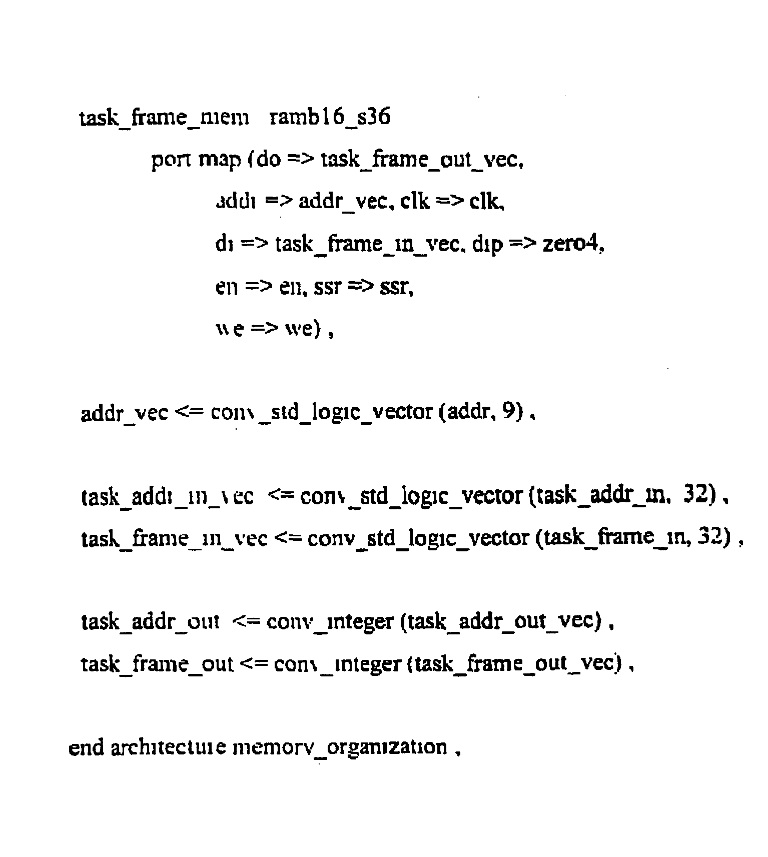

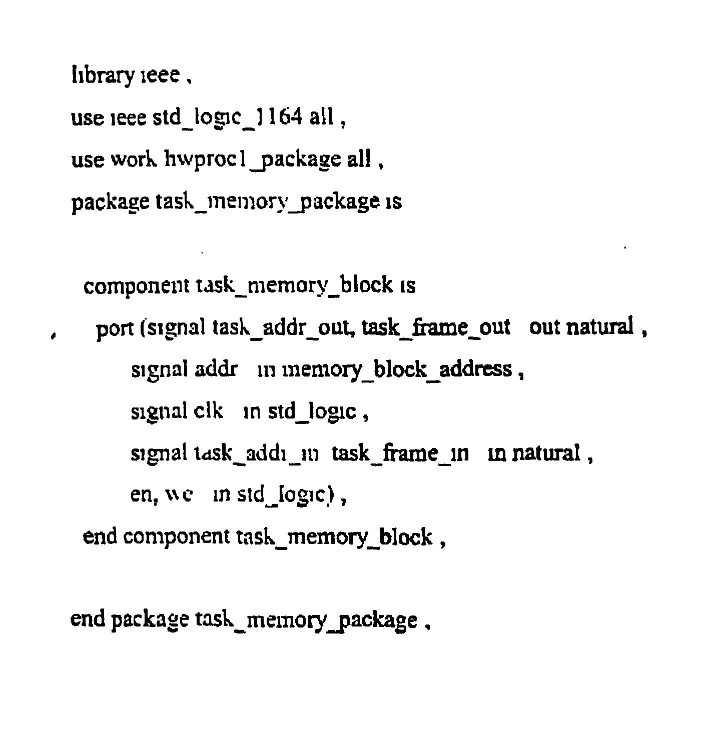

## Claims

1. A computer processor system comprising
at least one processor, said processor comprising an electronic circuit adapted to perform a hardware instruction based on a pi-calculus primitive

2. The computer processor system of claim 1, wherein the pi-calculus primitive is an asynchronous pi-calculus primitive

3. The computer processor system of claim 1. wherein said at least one processor further comprises a plurality of electronic circuits, each of said plurality of electronic circuits being adapted to perform a respective one of a set of hardware instructions based on a corresponding set of pi-calculus primitives

4. The computer processor system of claim 3, wherein the set of hardware instructions includes an instruction for asynchronously sending a pair of words and an instruction for reading a pair of words from a channel

5. The computer processor system of claim 4, wherein the instruction for asynchronously sending a pair of words is based, at least in part, on the hardware definition language description of a SEND2 instruction provided in the Appendix hereof

6. The computer processor system of claim 4, wherein the instruction for reading a pair of words from a channel is based, at least in part, on the hardware definition language description of a RECEIVE2 instruction provided m the Appendix hereof

7. The computer processor system of claim 4, wherein the set of hardware instructions includes at least one of
an instruction for dynamically creating a new communication channel,
an instruction for listening to a list of channels and then executing an action when data appears on one of the channels in the list,
an instruction for adding a new process to a list of processes running on the processor,
an instruction for spawning off a new process to process a data value received on a channel, and
an instruction for halting the execution of a process

8. The computer processor system of claim 7, wherein the instruction for dynamically creating a new communication channel is based, at least in part, on the hardware definition language description of a NEW instruction provided in the Appendix hereof

9. The computer processor system of claim 7, wherein the instruction for listening to a list of channels is based at least in part, on the hardware definition language description of a SELECT instruction provided in the Appendix hereof

10. The computer processor system of claim 7, wherein the instruction for adding a new process is based, at least in part, on the hardware definition language description of a PAR instruction provided in the Appendix hereof

11. The computer processor system of claim 7, wherein the instruction for spawning off a new process is based, at least in part, on the hardware definition language description of a SERVE instruction provided in the Appendix hereof

12. The computer processor system of claim 7. wherein the instruction for halting the execution of a process is based, at least in part, on the hardware definition language description of a HALT instruction provided in the Appendix hereof

13. A circuit board for use in a computer, said circuit board comprising
a plurality of processors, each of said processors being adapted to perform a respective one of a set of hardware instructions based on a corresponding set of pi-calculus primitives, and
a memory connected to each of the plurality of processors

14. The circuit board of claim 13, wherein the memory is a dual-ported memory

15. The circuit board of claim 14, wherein the dual-ported memory represents a channel used m a message-passing system

16. The circuit board of claim 15, wherein the dual-ported memory serves as a cache for program and data

17. The circuit board of claim 13, wherein the memory is accessed via an SDRAM controller

18. The circuit board of claim 17, wherein the SDRAM controller manages communication with a larger memory

19. The circuit board of claim 13, further comprising a one or more channels that provide connections to hardware resources

20. The circuit board of claim 13, further comprising a switch network via which the processors can access channels owned by another processor

21. The circuit board of claim 13, wherein the processors are implemented in a field programmable gate array

22. The circuit board of claim 13, wherein the processors are implemented in a silicon chip

23. A computer processor system, comprising
a communications pathway,
a plurality of processors independently coupled to the communications pathway, wherein each of said processors is adapted to perform a respective one of a set of hardware instructions based on a corresponding set of pi-calculus primitives

24. The system of claim 23, further comprising
a processing service coupled to the communications pathway, wherein each of the processors can access the processing service via the communications pathway

25. The system of claim 23, further comprising
a memory coupled to the communications pathway, wherein each of the processors can access the memory via the communications pathway

26. The system of claim 23, further comprising
a memory coupled to the communications pathway, wherein each of the processors can read from and write to the memory via the communications pathway

27. A processor for performing a hardware instruction, said processor comprising
a plurality of electronic circuits, wherein each of the electronic circuits is defined, at least in part, by one of the hardware definition language statements provided in the Appendix hereof
